# EUROPEAN PATENT APPLICATION

(11) **EP 1 136 956 A1**
(43) Date of publication of application: **26.09.2001**
(21) Application number: 00308789.7
(22) Date of filing: 05.10.2000
(51) Int. Cl.: G07C 15/00, G07F 17/32, G06F 17/60

(54) **Lottery service system and lottery service method utilizing an integrated circuit card**

(30) Priority: 21.03.2000 KR 0014201
(71) Applicant: Kwon, Hwang-Sub, Seoul (KR)
(72) Inventor: Kwon, Hwang-Sub, Seoul (KR)
(74) Representative: Harrison Goddard Foote

(57) **Abstract**

Disclosed is lottery service system and method utilizing an integrated circuit card, by which a user can utilize not only a communication service, but also an additional service of a lottery service. The system includes a server, and a terminal. The terminal has a card reader section, a card verification section, a display section, an input section, a memory section, and a first communication section (28) interconnected to a network. The server has a second communication section (33) interconnected to the network, a lottery ticket sale information storage section, a lottery ticket information generation section, a cipher algorithm section, a lottery ticket purchaser verification section, and a control section. The method includes: a card verification step, in which an availability of the card is verified by means of a card verification key stored in the card; a lottery ticket selling service step, a kind of the lottery service is confirmed, and a lottery ticket is sold according to the kind of the lottery ticket service selected by the user; and a winnings payment service step, in which a genuineness and a winning of the card are confirmed, and then winnings are paid to the user.

## Description

### BACKGROUND OF THE INVENTION

### Field of the Invention

The present invention relates to a lottery service system utilizing an integrated circuit card (hereinafter, referred to as IC card), and more particularly to a lottery service system, which includes a terminal for displaying a user interface showing various services for the user of the IC card according to fund information stored in the IC card, and a server capable of communicating with the terminal so as to provide the user with the service selected by the user, so that the user can utilize not only a communication service, but also an additional service of a lottery service, by means of the IC card, in which fund information for paying a charge for the communication service is stored.

Further, the present invention relates to a lottery service method provided by the lottery service system having a terminal and a server, in which information of a lottery ticket sold to a user of an integrated circuit card is encoded, and the user is confirmed by verifying the encoded value when the winnings are paid, so that the security can be firmly maintained when the lottery ticket is sold and the winnings are paid.

### Description of the Related Art

In the present times, an IC card such as a credit card, a telephone card, and a department store card is extensively used, and this extensive use of the IC card has been gradually spread out, since it is easier to use and store the IC card than the cash.

As the use of the IC card is activated, especially a debit card or a direct payment card, which is an IC card capable of paying a charge by subtracting the charge directly from a bank account and thereby functions just as the cash, can be used in place of the cash, and can be continuously used on condition that the card is recharged or the bank account has a sufficient balance.

The IC card is used in various systems including a credit system utilized in the market dealing in various lines of merchandise, a banking system dealing a payment and a deposit, and various accounting system used in a hospital, a restaurant, etc.

In general, the IC card includes an interface for carrying out a communication between internal systems such as a microprocessor and a memory and external systems, and an IC card reader/writer installed in the external system reads/writes the information. Further, the orders received in the external device are decoded by a control program contained in the IC card, and access to the data stored in the memory is executed according to an operation program stored in the memory, and then the access result is sometimes transmitted to the external system.

The IC card as described above is more widely used since it is rechargeable and has a superior security, in comparison with the existing magnetic card having a magnetic tape on which information is recorded.

In the meantime, in recent times, the lottery ticket and the lottery service are diversified and the sale of the lottery ticket is gradually increasing.

In the conventional lottery ticket selling method, a user can purchase a lottery ticket from a dealer such as a bank or a street peddling by paying cash for the lottery ticket, and the user can be paid winnings from the bank or new lottery ticket in place of the winnings, when his or her lottery ticket has won the lottery.

According to the conventional lottery ticket selling method, the user cannot purchase the lottery ticket without cash, and the lottery ticket cannot be sold without a person since the charge for the lottery ticket is always dealt by cash.

### SUMMARY OF THE INVENTION

Accordingly, the present invention has been made in an effort to solve the problems occurring in the related art, and it is an object of the present invention to provide a lottery service system, which includes a terminal for displaying a user interface showing various services for the user of the IC card according to fund information stored in the IC card, and a server capable of communicating with the terminal so as to provide the user with the service selected by the user, so that the user can utilize not only a communication service, but also an additional service of a lottery service, by means of the IC card, in which fund information is stored.

It is another object of the present invention to provide a lottery service method provided by a lottery service system having a terminal and a server, in which information of a lottery ticket sold to a user of an integrated circuit card is encoded, and the user is confirmed by verifying the encoded value when the winnings are paid, so that the security can be firmly maintained when the lottery ticket is sold and the winnings are paid.

In accordance with one aspect of the present invention, there is provided a lottery service system comprising an integrated circuit card, a server, and a terminal interconnected to the server through a network, wherein the terminal comprises: a card reader section for reading/writing information in the integrated circuit card, the card reader section recording a subtraction of a service charge for a user of the integrated circuit card from fund information stored in the integrated circuit card; a card verification section for verifying an availability of the integrated circuit card read by the card reader section; a display section for displaying a user interface of a lottery service provided for the user of the integrated circuit card; an input section, through which the user inputs necessary information, according to the user interface displayed on the display section; a memory section for storing information from the user interface displayed on the display section; and a first communication section interconnected to the network, so as to transmit the information of the integrated circuit card read by the card reader section and the information inputted through the input section to the server, and to receive the information transmitted from the server, and the server comprises: a second communication section interconnected to the network, so as to transmit and receive a kind of the lottery service selected by the user and information about a lottery ticket sold to the user; a lottery ticket sale information storage section for storing the information about the lottery ticket sold through the terminal as a database; a lottery ticket information generation section for generating an intrinsic identification code of the lottery ticket sold to the user; a cipher algorithm section in which a verification cipher algorithm generating a cipher value with respect to the information received by the terminal is stored; a lottery ticket purchaser verification section for comparing the cipher value generated in the cipher algorithm section when winnings are paid with a cipher value stored in the lottery ticket sale information storage section, so as to confirm the integrated circuit card; and a control section for controlling sections of the server, so as to provide the service selected by the user.

Preferably, the integrated circuit card comprises: a memory section capable of recording and erasing information, the memory section storing card information in relation to the integrated circuit card and fund information for paying the service charge for the lottery service; a cipher algorithm section in which a verification cipher algorithm generating a cipher value with respect to the information stored in the memory section of the integrated circuit card is stored; and an input/output section for transmitting information stored in the memory section to external systems and receiving information transmitted from the external systems.

Further, the memory section of the integrated circuit card comprises: a manufacturer sector in which information in relation to a manufacturer of the integrated circuit card is stored; an issuer sector, in which information in relation to an issuer of the integrated circuit card is stored; a fund information sector, in which fund information capable of being expended by the integrated circuit card is stored; a fund information backup sector, in which the fund information stored in the fund information sector is backed up; a card verification key sector, in which a card verification key for confirming if the integrated circuit card is available is stored; and a user sector, in which lottery ticket information of the lottery ticket purchased in the terminal by means of the integrated circuit card is stored, wherein the lottery ticket information comprises at least one of the type of the lottery ticket, a lottery ticket dedicated fund, lottery ticket deposits, personal information of the purchaser, details of the purchase of the lottery ticket, an intrinsic purchase identification code of the lottery ticket, a secret purchase code of the lottery ticket, and a winning identification code of the lottery ticket.

Moreover, the intrinsic identification code may comprise one of the intrinsic purchase identification code, which is generated when the user purchases the lottery ticket, and the winning identification code, which is generated when the lottery ticket sold to the user is a winning ticket.

In the meantime, the present invention also provides a lottery service method utilizing a lottery service system comprising an integrated circuit card, a server, and a terminal interconnected to the server through a network, the lottery service method comprising: a card verification step, in which if the integrated circuit card is an available card is determined by confirming a card verification key stored in the integrated circuit card, when the integrated circuit card is inserted into the terminal; a lottery ticket selling service step, in which, when the integrated circuit card is an available card, if a service selected by a user is a lottery service is confirmed, and the user is required to select a kind of the lottery ticket service in the terminal, and then a lottery ticket selling service is carried out according to the kind of the lottery ticket service selected by the user; and a winnings payment service step, in which, when the user requires a payment of winnings, if the user□s integrated card is equal to the integrated card used in utilizing the lottery ticket selling service is confirmed in the server, and then a winnings payment service is carried out in the terminal so as to pay the winnings to the user in the terminal.

Preferably, when the kind of the lottery ticket service selected by the user is a lotto type lottery service, the lottery ticket selling service step comprises the steps of: requiring the user, who want to purchase the lottery ticket, to input a residence code of the user, and then transmitting the residence code inputted by the user to the server, by means of the terminal; referring the residence code, and then, when the user is an adult, transmitting a referred result of the residence code to the terminal, by means of the server; requiring the user to input personal information of the user and details of a purchase of the lottery ticket, when the user is an adult, by means of the terminal; collecting a price of the lottery ticket by balancing the price from a fund stored in the integrated card according to the details of the purchase of the lottery ticket, and then transmitting the personal information and the details of the purchase to the server, by means of the terminal; storing the personal information and the details of the purchase, and generating an intrinsic purchase identification code of the lottery ticket which is sold to the user and transmitting the intrinsic purchase identification code to the terminal, by means of the server; and storing the personal information, the details of the purchase, and the intrinsic purchase identification code in the integrated circuit card, by means of the terminal.

Further, when the kind of the lottery ticket service selected by the user is an instant type lottery service, the lottery ticket selling service step comprises the steps of: requiring the user, who want to purchase the lottery ticket, to input a residence code of the user, and then transmitting the residence code inputted by the user to the server, by means of the terminal; referring the residence code, and then, when the user is an adult, transmitting a referred result of the residence code to the terminal, by means of the server; collecting a price of the lottery ticket by balancing the price from a fund stored in the integrated card according to the details of the purchase of the lottery ticket, and requesting the server to transmit a lottery ticket number, when the user is an adult, by means of the terminal; generating a lottery ticket number and referring if the lottery ticket number is a winning number, and then, when the lottery ticket number is the winning number, storing the winning number and transmitting the lottery ticket number and the winning number to the terminal, by means of the server; requiring the user to select a winnings payment method, and then transmitting the winnings payment method, selected by the user, to the server, when the lottery ticket number is the winning number, by means of the terminal; and storing the winnings payment method in the server.

Furthermore, the lottery ticket selling service step may further comprise the steps of: requiring the user to input a secret purchase code, by which the user of the integrated circuit card can be confirmed when the winnings are paid, and transmitting the secret purchase code, inputted by the user, to the server, by means of the terminal; and generating a cipher value for the secret purchase code by means of a verification cipher algorithm in the server, and storing the cipher value in the server.

Also, the lottery ticket selling service step may further comprise the steps of: reading card information, which is assigned when the integrated circuit card is issued, and transmitting the card information to the server, by means of the terminal; and generating a cipher value for the card information by means of a verification cipher algorithm in the server, and storing the cipher value in the server.

Also, the lottery ticket selling service step may further comprise the steps of: generating a cipher value for a card secret key and card information of the integrated circuit card, which are assigned when the integrated circuit card is issued, by means of a verification cipher algorithm in the integrated circuit card, and transmitting the cipher value to the terminal from the integrated circuit card; transmitting the cipher value, received from the terminal, to the server from the terminal; and storing the cipher value for the card secret key and the card information in the server.

The lottery ticket selling service step may further comprise the steps of: reading intrinsic lottery ticket information, which is assigned when the integrated circuit card is issued, and transmitting the intrinsic lottery ticket information to the server, by means of the terminal; and generating a cipher value for the intrinsic lottery ticket information by means of a verification cipher algorithm in the server, and storing the cipher value in the server.

The lottery ticket selling service step may further comprise the steps of: generating a winning identification code in the server, and transmitting the winning identification code to the terminal from the server, and then generating and storing a cipher value for the winning identification code by means of a verification cipher algorithm in the server, when the lottery ticket number generated in the server is a winning number; and storing the winning identification code, received from the server, in the integrated circuit card by means of the terminal.

It is preferred that the winnings payment service step comprises the steps of: reading information stored in the integrated circuit card, and transmitting the information to the server, by means of the terminal, after carrying out the lottery ticket selling service step; generating a first cipher value for the information, which is transmitted from the terminal, by means of a verification cipher algorithm in the server, comparing the first cipher value with a second cipher value, which is already stored in the lottery ticket selling service step, so as to refer a result of the lottery in the server, and then transmitting a referred result to the terminal from the server; and paying winnings to the user in the terminal when the lottery ticket is the winning ticket.

### BRIEF DESCRIPTION OF THE DRAWINGS

The above objects, and other features and advantages of the present invention will become more apparent after a reading of the following detailed description when taken in conjunction with the drawings, in which:
FIG. 1 is a schematic block diagram of a lottery service system according to the present invention;
FIG. 2 is a memory map for showing sectors in a memory section of an integrated circuit card employed in a lottery service system according to the present invention;
FIGs. 3A to 3C show a flow chart of a lotto type lottery ticket selling service according to the first embodiment of the present invention;
FIG. 4 is a flow chart of a winning reference service of a lotto type lottery ticket according to the present invention;
FIG. 5 is a flow chart of a small winnings payment service of a lotto type lottery ticket according to the present invention;
FIG. 6 is a flow chart of a large winnings payment service of a lotto type lottery ticket sold according to the lotto type lottery ticket selling service as shown in FIGs. 1 to 3;
FIG. 7 is a flow chart of a lotto type lottery ticket selling service according to the second embodiment of the present invention;
FIG. 8 is a flow chart of a large winnings payment service of a lotto type lottery ticket sold according to the lotto type lottery ticket selling service as shown in FIG. 7;
FIG. 9 is a flow chart of a lotto type lottery ticket selling service according to the third embodiment of the present invention;
FIG. 10 is a flow chart of a large winnings payment service of a lotto type lottery ticket sold according to the lotto type lottery ticket selling service as shown in FIG. 9;
FIGs. 11A and 11B show a flow chart of an instant type lottery ticket selling service according to the fourth embodiment of the present invention;
FIG. 12 is a flow chart of a winnings payment service of an instant type lottery ticket sold according to the instant type lottery ticket selling service as shown in FIGs. 11A and 11B;
FIGs. 13A and 13B show a flow chart of an instant type lottery ticket selling service according to the fifth embodiment of the present invention;
FIG. 14 is a flow chart of a winnings payment service of an instant type lottery ticket sold according to the instant type lottery ticket selling service as shown in FIGs. 13A and 13B;
FIG. 15 is a flow chart of an instant type lottery ticket selling service according to the sixth embodiment of the present invention;
FIG. 16 is a flow chart of a winnings payment service of an instant type lottery ticket sold according to the instant type lottery ticket selling service as shown in FIG. 15;
FIGs. 17A and 17B show a flow chart of an instant type lottery ticket selling service according to the seventh embodiment of the present invention;
FIG. 18 is a flow chart of a winnings payment service of an instant type lottery ticket sold according to the instant type lottery ticket selling service as shown in FIGs. 17A and 17B;
FIGs. 19A and 19B show a flow chart of an instant type lottery ticket selling service according to the eighth embodiment of the present invention;
FIG. 20 is a flow chart of a winnings payment service of an instant type lottery ticket sold according to the instant type lottery ticket selling service as shown in FIGs. 19A and 19B.

### DETAILED DESCRIPTION OF PREFERRED EMBODIMENTS

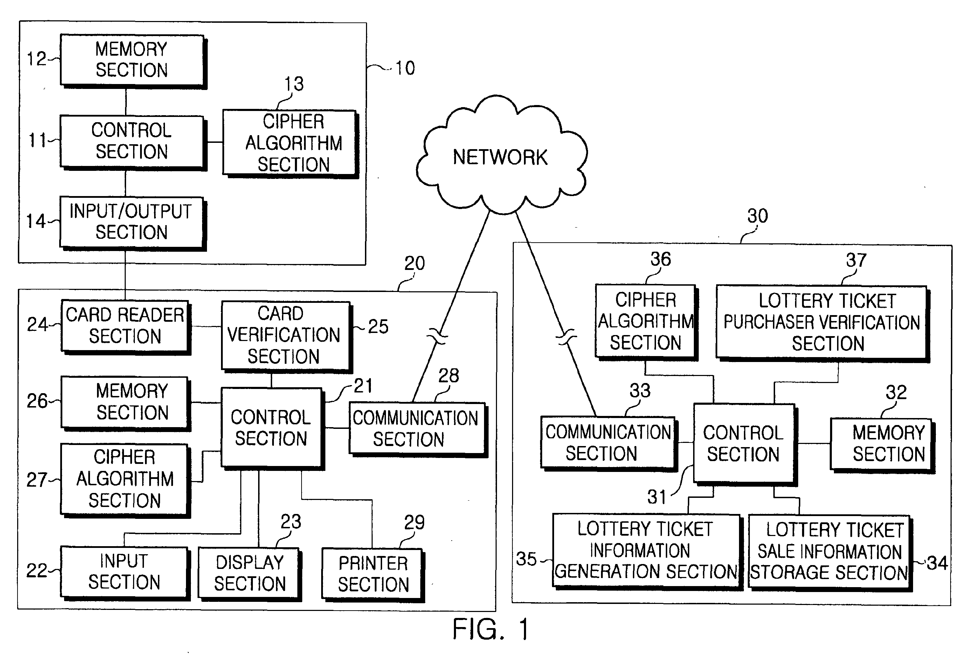

Hereinafter, described in detail will be a lottery service system and a lottery service method utilizing an integrated circuit card according to the present invention,. with reference to FIGs. 1 to 20.

Referring to FIG. 1, a lottery service system of the present invention includes an IC card 10 in which information of remaining fund to be expended in using a lottery service, various information for identifying the purchaser of the lottery ticket, and the like are recorded, a terminal 20 for receiving the IC card 10 and providing a user interface according to the lottery service, and a service server 30 communicating with the terminal 20, providing the lottery service, and verifying the user□s IC card 10.

In this case, the terminal 20 and the service server 30 are communication appliances connected to each other through a communication network for transmitting data between interconnected elements, in order to achieve a common object of the data communication.

Further, as the terminal 20 arranged for a general user, the present invention may employ a public phone capable of providing a communication service for an IC card user.

First, the IC card 10 includes a control section 11, a memory section 12, a cipher algorithm section 13, and an input/output section 14. The control section 11 generally controls all sections of the IC card 10 according to a predetermined control program.

In the memory section 12 are stored various information including card information in relation to the IC card 10, fund information to be expended in utilizing the communication service, lottery ticket information according to the purchase of the lottery ticket, and the like.

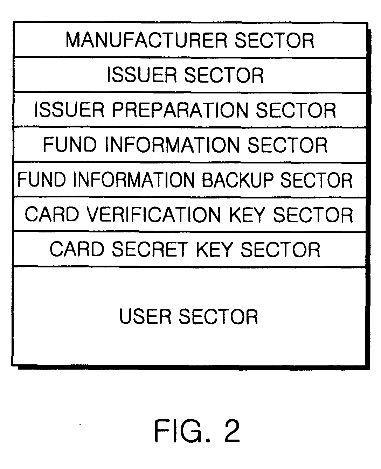

In this case, the memory section 12 has interior sectors including a manufacturer sector, an issuer sector, an issuer preparation sector, a fund information sector, a fund information backup sector, a card verification key sector, a card secret key sector, and a user sector, as shown in FIG. 2.

The manufacturer sector stores information in relation to a manufacturer of the chip, such as an order code, chip manufacturer information, and the like.

The issuer sector stores information in relation to an issuer, who issued the IC card 10, such as a country code, information of the type of the card, and the like.

The issuer preparation sector selectively stores information excepting the basic information fixedly stored in the manufacturer sector and the issuer sector. For example, the issuer preparation sector selectively stores winning identification code according to an embodiment of an instant type lottery service, which will be described later in this specification. In this case, the intrinsic lottery ticket information means information, which shows that the IC card 10 may be used to purchase the lottery ticket, and by which each card is endowed with an intrinsic number.

The fund information sector is a common sector, in which information of expendable fund remaining in the IC card 10 is stored, including fund information for the communication service and for the lottery service.

The fund information backup sector is a sector, in which the fund information stored in the fund information sector is backed up, and is utilized to recover a memory of the IC card 10, e.g., when it is damaged.

The card verification key sector stores a card verification key generated by a card-issuing device so as to confirm if the card is normally used, and is used to verify the card when the lottery ticket is sold or the win of the lottery is confirmed.

The card secret key sector stores a card secret key generated by the card-issuing device with reference to the manufacturer information and the issuer information, and is used to verify the card when the win of the lottery is confirmed.

The user sector stores lottery ticket information purchased by means of the IC card 10, including the type of the lottery ticket, a lottery ticket dedicated fund, lottery ticket deposits, personal information of the purchaser, details of the purchase of the lottery ticket, an intrinsic identification code of the purchase of the lottery ticket, a secret purchase code of the lottery ticket, and an identification code of the win of the lottery ticket.

Next, the cipher algorithm section 13 of the IC card stores a verification cipher value algorism for generating a cipher value for information stored in the memory section 12, that is, for generating a cipher value for the card verification key stored in the card verification key sector or for generating a cipher value for the card secret key stored in the card secret key sector, so as to verify the card when the lottery ticket is sold or the winnings of the lottery are paid.

The input/output section 14 is a section for transmitting and receiving data between the IC card 10 and the terminal 20, which transmits various information stored in the memory section 12 and the cipher value generated in the cipher algorithm section 13 to the terminal 20 and receives various information in relation to the purchase of the lottery ticket from the terminal 20.

In the meantime, the terminal 20 includes a control section 21, an input section 22, a display section 23, a card reader section 24, a card verification section 25, a memory section 26, a cipher algorithm section 27, a communication section 28, and a printer section 29.

The control section 21, in which the IC card 10 is inserted, generally controls the sections of the terminal 20 according to a predetermined program.

The input section 22 receives various information including a choice between a general telephone function and a lottery service function and a choice between the types of the lottery, which is necessary for the user of the IC card 10, and then transmits the inputted information to the control section 21. In this case, a touch-screen type or a keyboard type may be employed as the input section 22.

The display section 23 displays the operation state of the terminal 20 and other necessary information. As the display section 23, a liquid crystal display panel or like display devices may be employed.

The card reader section 24 reads various information stored in the memory section 12 of the IC card 10 inserted in a card insertion port (not shown), and records various information in the memory section 12 of the IC card 10 according to the control by the control section 21.

The card verification section 25 determines if the IC card 10 read by the card reader section 24 is usable, and confirms the genuineness of the IC card 10 by comparing the cipher value generated in the cipher algorithm section 13 of the IC card 10 with respect to the card verification key with the cipher value generated in the cipher algorithm section 27 of the terminal 20.

The memory section 26 stores various program data, which will be executed by the control section 21. Especially, the memory section 26 stores various display data, which will be displayed on the display section 23 according to the communication service or the lottery service by preferred embodiments of the present invention.

The cipher algorithm section 27 stores the verification cipher value algorism for generating a cipher value with respect to the card verification key of the IC card 10.

The communication section 28 interconnects the terminal 20 and the service server 30 with each other through a network, that is, the communication section 28 transmits information inputted directly by the user of the IC card 10 from the terminal 20 and various information of the IC card 10 read by the card reader section 24 to the service server 30, and receives information of the sold lottery ticket from the service server 30.

The printer section 29 outputs and prints the details of the lottery ticket purchased by the user of the IC card 10 according to the control of the control section 21.

In the meantime, the service server 30 communicates with the terminal 20 so as to provide the communication service and the lottery service for the user, and includes a control section 31, a memory section 32, a communication section 33, a lottery ticket sale information storage section 34, a lottery ticket information generation section 35, a cipher algorithm section 36, and a lottery ticket purchaser verification section 37.

The control section 31 generally controls the sections of the service server 30 and provides the communication service and the lottery service for the user of the IC card 10.

The memory section 32 stores various programs and data to be executed by the control section 31.

The communication section 33 interconnects the terminal 20 and the service server 30 with each other through the network, that is, the service server 30 receives IC card information or information inputted by the user according to the service selected by the user from the terminal 20, and transmits the executed result of the corresponding service to the terminal 20. In other words, the service server 30 receives telephone number inputted by the user and forms a communication channel when the user selects the communication service, while receiving and transmitting information in relation to the sale and the win of the lottery ticket when the user selects the lottery service.

The lottery ticket sale information storage section 34 stores the information of the sold lottery ticket from the terminal 20 as a database, and utilizes the information in verifying the card when the winnings of the lottery are paid.

The lottery ticket information generation section 35 generates, e.g., the lottery ticket number when the instant lottery service is chosen in the terminal 20, and generates a winning identification code when the lottery ticket number wins the lottery, according to preferred embodiments of the present invention, which will be described later in this specification. Further, the lottery ticket information generation section 35 generates an intrinsic purchase identification code when the lottery ticket is sold. The generated lottery ticket number, the winning identification code, and the intrinsic purchase identification code are stored in the lottery ticket sale information storage section 34.

The cipher algorithm section 36 generates a cipher value for the information received in the terminal 20 in order to verify the IC card 10 when the lottery ticket is sold or the winnings are paid.

The lottery ticket purchaser verification section 37 confirms if the IC card when the winnings are paid is the same as the IC card when the lottery ticket is sold by comparing the cipher value generated in the cipher algorithm section 36 when the winnings are paid with the cipher value stored in the lottery ticket sale information storage section 34 after being generated when the lottery ticket is sold.

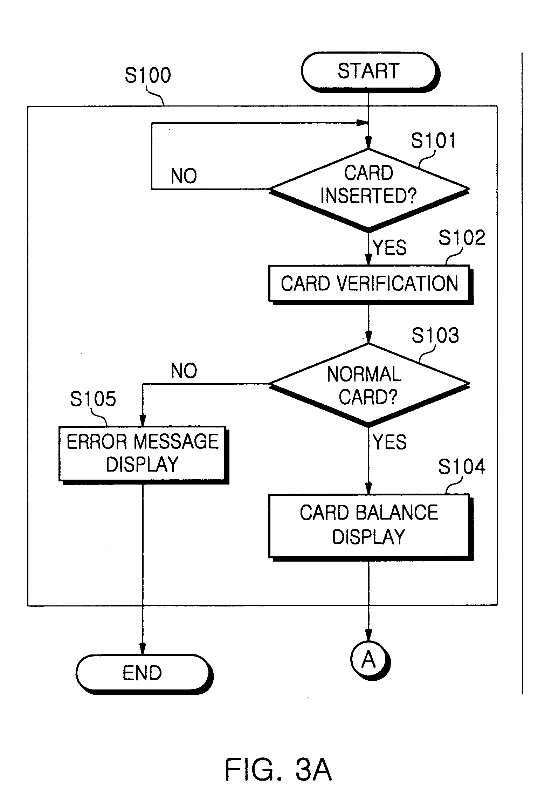

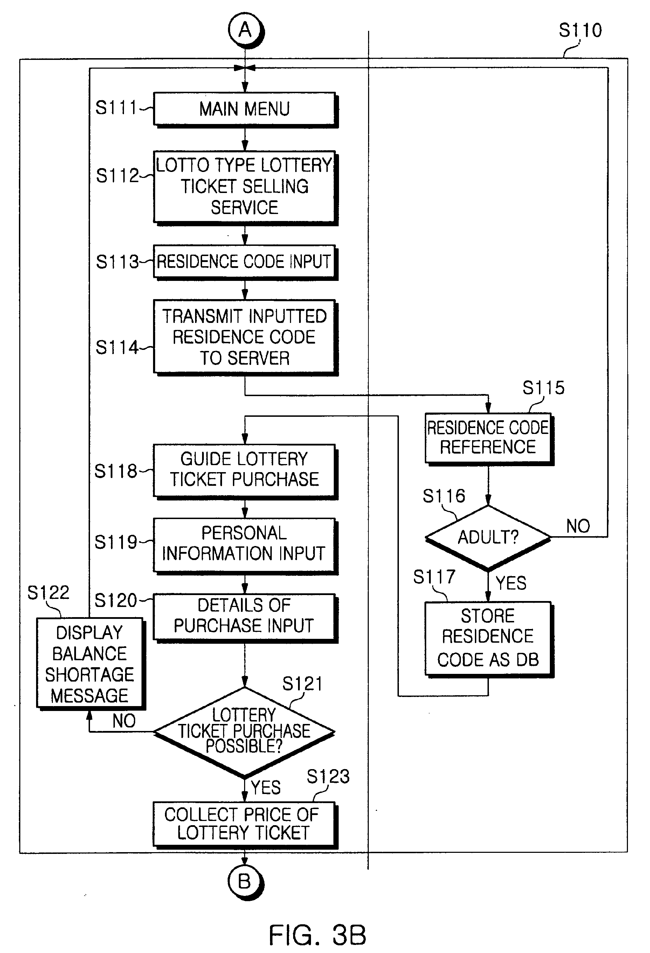

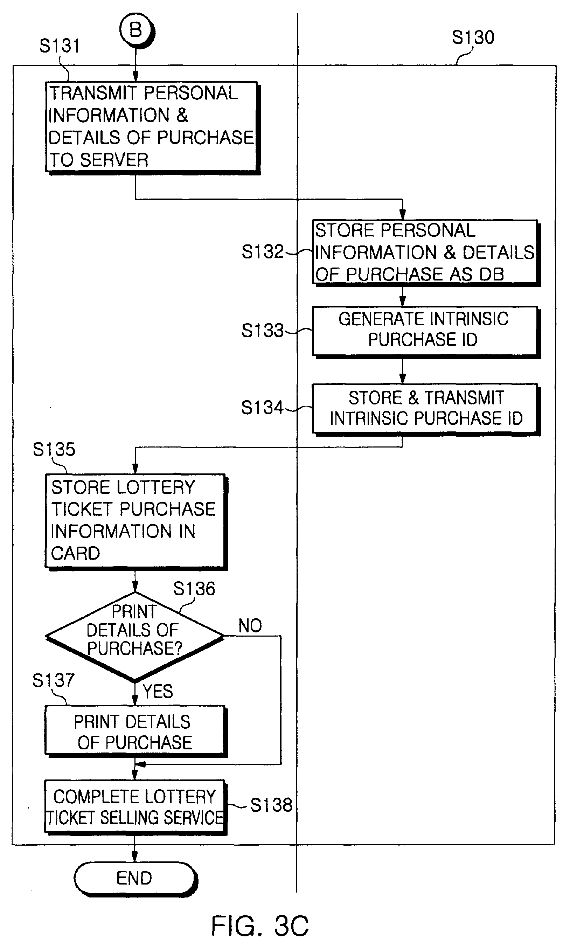

Hereinafter, a method for selling the lottery ticket and paying the winnings by means of the IC card 10 by the lottery service system having the construction as described above will be described in detail with reference to FIGs. 3 to 20.

The lottery service according to the present invention is divided into a lotto type lottery service and an instant type lottery service.

In the lotto type lottery service, a user purchases at least one lottery ticket and selects the lottery ticket number, and the winning number is decided by lot in the service server 30 on a predetermined date.

In the instant type lottery service, the service server 30 instantly generates a lottery ticket number when a user purchases the lottery ticket, and the user can instantly confirm if the generated number is the winning number.

In the present specification, a detailed description about the communication service according to the invention will be omitted since it is the same as in a general pay phone for a user to use the communication service by means of the IC card 10 in the terminal 20, and only the lottery service, which can be used at the expense of the lottery ticket dedicated fund among the fund information stored in the IC card 10, will be described in detail.

### <LOTTO TYPE LOTTERY SERVICE>

FIGs. 3A to 10 are flow charts for showing various lotto type lottery services according to several embodiments of the present invention.

The system for providing the lotto type lottery services provides a lottery ticket selling service, in which if a lottery ticket is a winning ticket is confirmed, and a winnings payment service, in which the winnings are paid.

The lottery ticket selling service comprises a card verification step in which the genuineness of the IC card 10 is examined, a lotto type lottery ticket selling step in which lottery ticket is sold to a user of the IC card 10, and a winnings-payment-requirement-setting step in which requirements for paying winnings when the lottery ticket is a winning ticket are set.

In a lottery ticket selling service according to a first embodiment of the present invention as shown in FIGs. 3A to 3C, the user of the IC card 10 inserts the IC card 10 into a card insertion port provided at the terminal 20, in order to buy a lottery ticket.

Then, the control section 21 of the terminal 20 performs a card verification step (S100) in which if the inserted IC card 10 is a normal and usable card is confirmed (see FIG. 3A). In detailed description, the control section 21 of the terminal 20 confirms if the IC card 10 is inserted in the card insertion port (S101), and verifies the inserted IC card 10 (S102), so as to confirm if the IC card 10 is usable and normal (S103).

That is, the control section 11 of the IC card 10 generates a cipher value for the card verification key stored in the card verification key sector of the memory section 12 by the cipher algorithm section 13 of the IC card 10, and transmits it to the terminal 20.

Then, the card reader section 24 of the terminal 20 transmits the cipher value generated in the IC card 10 to the card verification section 25, and determines the genuineness of the IC card 10 by comparing the cipher value generated in the cipher algorithm section 27 for the stored card verification key with the cipher value generated in the IC card 10 if they are the same.

As a result of the comparison, when the IC card 10 inserted in the terminal 20 is a usable normal card, the control section 21 of the terminal 20 controls the card reader section 24 to read the fund information stored in the fund information sector and the user sector of the memory section 12 of the IC card 10, and displays the balance in the card on the display section 23 (S104).

In this case, the entire fund information, by which the communication service and the lottery service can be used, is stored in the fund information sector of the IC card 10, and the lottery ticket dedicated fund, that is, a fund to be expended in purchasing the lottery ticket, is stored in the user sector. It is preferred that both of the lottery ticket dedicated fund and the entire fund are displayed on the display section 23.

When the IC card 10 inserted in the terminal 20 is not a usable normal card as a result of the comparison, the control section 21 of the terminal 20 displays an error message on the display section 23 (S105), and stops the service of selling the lottery ticket.

When the inserted IC card 10 has been verified to be a usable normal card, the lotto type lottery ticket selling step (S110), in which the lottery ticket is sold to the user of the IC card 10, is subsequently carried out, as shown in FIG. 3B.

The control section 21 of the terminal 20 displays a main menu, from which various kinds of service items provided by the lottery service can be selected, on the display section 23 (S111). In this case, the displayed service items include a choice between the kinds of the lottery ticket, the lotto type lottery ticket and the instant type lottery ticket, and a selling of the lottery ticket, a verification of the winning, a payment of the winnings, and the like in relation to the chosen kind of the lottery ticket after the choice.

When the user chooses the lotto type lottery ticket selling service from the displayed service items by means of the input section 22 (S112), the control section 21 displays a message requiring the user to input the user□s residence code on the display section 23 (S113).

When the user's residence code has been inputted by means of the input section 22, the control section 21 transmits the inputted residence code through the communication section 28 to the service server 30 (S114).

In the meantime, when the residence code has been received through the communication section 33 from the terminal 20, the control section 31 of the service server 30 refers the inputted residence code (S115), so as to verify if the user of the IC card 10, who want to buy the lottery ticket by means of the terminal 20, is an adult (S116).

When the user of the IC card 10 is an adult as a result of the verification, the lottery ticket sale information storage section 34 stores the inputted residence code as a database according to the control of the control section 31 (S117), and transmits the verified result of the residence code to the terminal 20.

When the user of the IC card 10 is not an adult according to the verified result of the residence code received from the service server 30, the control section 21 of the terminal 20 displays a message of refusing to sell the lottery ticket because the user of the IC card 10 is not an adult, and then returns the process to the step Sill, so as to display the main menu and guide the user to input the lottery ticket purchase information if the user is an adult (S118).

The user inputs his and her personal information through the input section 22 according to the purchase information input guide displayed on the display section 23 (S119), and inputs details of the purchase (S120).

In this case, the personal information may include a name, an address, a telephone number, and an account number of the buyer, and the like, and the details of the purchase may include the lottery ticket number to buy, the ticket number of each lottery ticket, a sold date, the time of lotting the lottery ticket, and the like.

When the user□s personal information and the details of the purchase have been completely inputted, the control section 21 of the terminal 20 decides if the user can purchase the lottery ticket by comparing the lottery ticket dedicated fund stored in the IC card 10 with the price for the tickets the user ordered (S121).

As a result of the decision, when the balance of the lottery ticket dedicated fund stored in the IC card 10 is smaller than the price for the tickets the user ordered, the control section 21 of the terminal 20 displays an error message indicating a shortage of the balance on the display section 23 (S122), and then returns the process to the step Sill to display the main menu.

When the balance of the lottery ticket dedicated fund stored in the IC card 10 is equal to or more than the price for the tickets the user ordered as a result of the decision, the control section 21 of the terminal 20 controls the card reader section 24 to collect the price of the sold lottery ticket by balancing the price from the lottery ticket dedicated fund stored in the user sector of the memory section 12 of the IC card 10.

When the lotto type lottery ticket selling step (S110) has been completed in the process as described above, the winnings-payment-requirement-setting step (S130), in which requirements to pay the winnings when the sold lottery ticket is a winning ticket are set, is executed, as shown in FIG. 3C.

In detailed description, when the price of the sold lottery ticket has been collected, the control section 21 of the terminal 20 transmits the personal information and the details of the purchase inputted in the lotto type lottery ticket selling step (S110) through the communication section 28 to the service server 30 (S131).

Meanwhile, the control section 31 of the service server 30 stores the personal information and the details of the purchase received through the communication section 33 from the terminal 20 in the lottery ticket sale information storage section 34 as a database (S132).

Thereafter, the lottery ticket information generation section 35 generates an intrinsic purchase identification code according to the control of the control section 31 (S133). In this case, the intrinsic purchase identification code is an identification code for verifying the user when the winnings of the lottery ticket is paid to the user, and is generated whenever the lottery ticket is sold.

The control section 31 of the service server 30 stores the intrinsic purchase identification code in the lottery ticket sale information storage section 34 as a database, and transmits the intrinsic purchase identification code through the communication section 33 to the terminal 20 (S134).

When the intrinsic purchase identification code is received from the service server 30 through the communication section 28, the control section 21 of the terminal 20 controls the card reader section 24 to store the personal information and the details of the purchase, respectively inputted by the user, and the intrinsic purchase identification code in the user sector of the memory section 12 of the IC card 10 (S135).

When the lottery ticket information sold to a user of the IC card 10 is stored in the IC card 10, the user of the IC card 10 can selectively print the details of the purchase by means of the printer section 29 of the terminal 20, so as to easily confirm the details of the purchase.

That is, when the lottery ticket information sold to a user of the IC card 10 is stored in the IC card 10, the control section 21 of the terminal 20 displays a message inquiring if the user want to print the details of the purchase on the display section 23 (S136).

When the user of the IC card 10 selects through the input section 22 to print the details of the purchase, the control section 21 outputs to print the details of the purchase of the lottery ticket sold to the user through the printer section 29 (S137), and completes the lottery ticket selling service (S138), so that the step S130 is ended.

In this case, when the user of the IC card 10 does not want to print the details of the purchase of the lottery ticket, the control section 21 stores the lottery ticket information in the IC card 10, and then completes the lottery ticket selling service (S138).

When the lottery ticket selling service has been executed according to a first embodiment of the present invention as described above, the lottery ticket information including the personal information of the purchaser, the details of the purchase, and the intrinsic purchase identification code is equally stored in the user sector of the memory section 12 of the IC card 10 and the lottery ticket sale information storage section 34 of the service server 30.

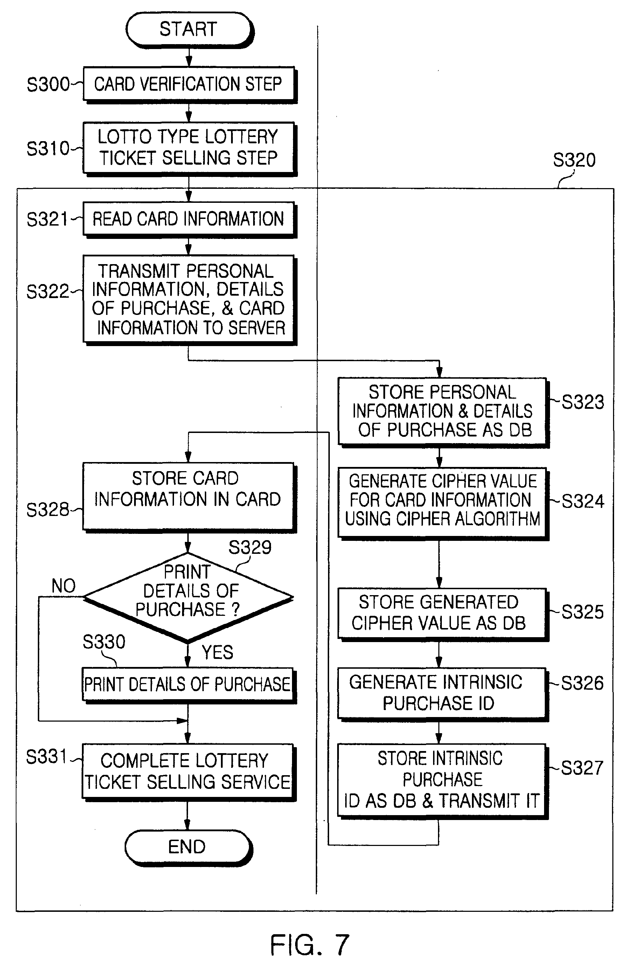

Hereinafter, a lottery ticket selling service according to a second embodiment of the present invention will be described with reference to FIG. 7. In the present embodiment, a detailed description about a card verification step (S300), in which an availability of the IC card 10 is examined, and a lotto type lottery ticket selling step (S310), in which lottery ticket is sold to the verified user of the IC card 10, will be omitted, since they are the same as the card verification step (S100) and the lotto type lottery ticket selling step (S110) in the first embodiment of the present invention as shown in FIGs. 3A to 3C.

After the card verification step (S300) and the lotto type lottery ticket selling step (S310) are carried out, a winnings-payment-requirement-setting step (S320) is carried out, which will be described hereinbelow in detail.

First, the control section 21 of the terminal 20 controls the card reader section 24 to read card information stored in the memory section 12 of the IC card 10 (S321).

In this case, the card information is information generated by collecting a predetermined data from the information in relation to the manufacturer and the issuer of the IC card 10, and is selectively stored in the issuer preparation sector of the memory section 12 of the IC card 10 when the card is issued.

When the card information stored in the IC card 10 has been read, the control section 21 of the terminal 20 transmits the personal information of the user and the details of the purchase, respectively inputted in lotto type lottery ticket selling step (S310), and the card information through the communication section 28 to the service server 30 (S322).

Meanwhile, the control section 31 of the service server 30 stores the personal information and the details of the purchase, which are received through the communication section 33, in the lottery ticket sale information storage section 34 as databases (S323), the cipher algorithm section 36 generates cipher value for the card information received in the terminal 20 according to the control of the control section 31 (S324), and the lottery ticket sale information storage section 34 stores the generated cipher value as a database (S325).

When the cipher value for the card information has been stored, the lottery ticket information generation section 35 generates an intrinsic purchase identification code (S326), and the control section 31 stores the intrinsic purchase identification code generated in the lottery ticket information generation section 35 in the lottery ticket sale information storage section 34 as a database, and transmits it through the communication section 33 to the terminal 20 (S327).

When the intrinsic purchase identification code has been received through the communication section 28 from the service server 30, the control section 21 of the terminal 20 controls the card reader section 24 to store the personal information and the details of the purchase, respectively inputted by the user, and the intrinsic purchase identification code in the user sector of the memory section 12 of the IC card 10 (S328).

When the lottery ticket information including the personal information, the details of the purchase, and the intrinsic purchase identification code has been stored in the IC card 10, the control section 21 of the terminal 20 displays a message inquiring if the user want to print the details of the purchase on the display section 23 (S329).

When the user of the IC card 10 selects through the input section 22 to print the details of the purchase, the control section 21 prints the details of the lottery ticket sold to the user by means of the printer section 29 (S330), and then completes the lottery ticket selling service (S331), so that the process is ended.

In the lottery ticket selling service according to the second embodiment of the present invention as described above, not only the lottery ticket information including the personal information of the user, the details of the purchase, and the intrinsic purchase identification code is equally stored in the user sector of the memory section 12 of the IC card 10 and in the lottery ticket sale information storage section 34 of the service server 30, but also the cipher value for the card information of the IC card 10 generated in the service server 30 is stored in the lottery ticket sale information storage section 34 of the service server 30.

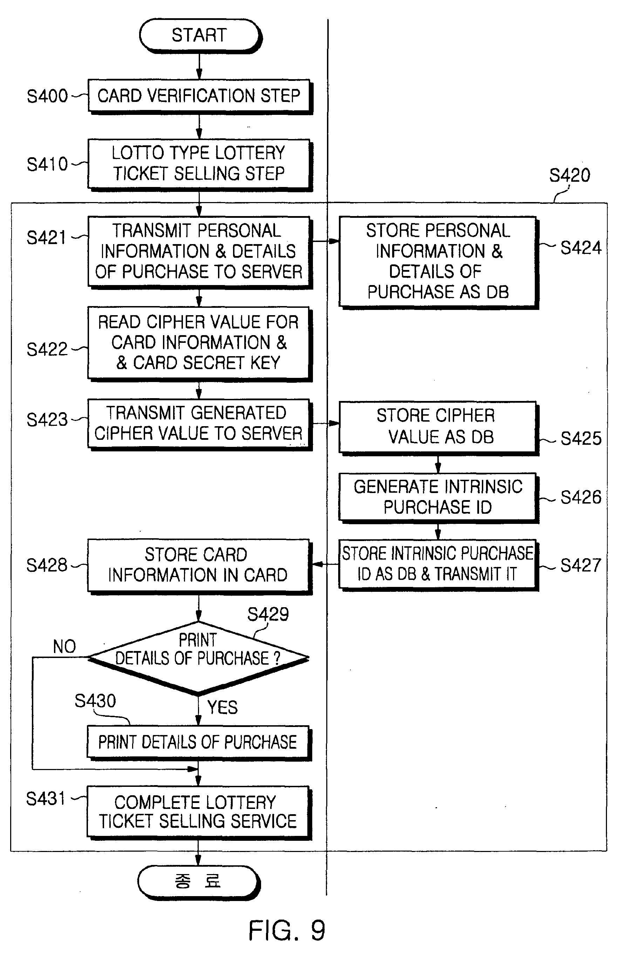

Hereinafter, a lottery ticket selling service according to a third embodiment of the present invention will be described with reference to FIG. 9. In this case, a detailed description about a card verification step (S400) and a lotto type lottery ticket selling step (S410) will be omitted, since they are the same as those in the first embodiment of the present invention.

After the card verification step (S400) and the lotto type lottery ticket selling step (S410) are carried out, a winnings-payment-requirement-setting step (S410) is carried out, which will be described hereinbelow in detail.

The control section 21 of the terminal 20 transmits the personal information and the details of the purchase inputted in the lotto type lottery ticket selling step (S410) through the communication section 28 to the service server 30 (S421).

After the personal information and the details of the purchase are transmitted to the service server 30, the control section 21 of the terminal 20 transmits an order requiring a transmission of cipher value for verifying the IC card through the card reader section 24 to the IC card 10.

The control section 11 of the IC card 10 controls the cipher algorithm section 13 to generate cipher values for the card information and the card secret key stored in the memory section 12, and transmits the generated cipher values to the terminal 20.

When the cipher values generated in the IC card 10 has been read by means of the card reader section 24 (S422), the terminal 20 transmits the read cipher values through the communication section 28 to the service server 30 (S423).

Meanwhile, the control section 31 of the service server 30 stores the personal information and the details of the purchase, which are received through the communication section 33 from the terminal 20 in the step S421, in the lottery ticket sale information storage section 34 as databases (S424).

Further, the control section 31 of the service server 30 stores the cipher values, which are received through the communication section 33 from the terminal 20 in the step S423, in the lottery ticket sale information storage section 34 as databases (S425), and controls the lottery ticket information generation section 35 to generate an intrinsic purchase identification code (S426).

The control section 31 of the service server 30 stores the intrinsic purchase identification code, which is generated in the lottery ticket information generation section 35, in the lottery ticket sale information storage section 34 as a database, and simultaneously transmits it through the communication section 33 to the terminal 20 (S427).

When the intrinsic purchase identification code has been received through the communication section 28 from the service server 30, the control section 21 of the terminal 20 controls the card reader section 24 to store the personal information and the details of the purchase, respectively inputted by the user, and the intrinsic purchase identification code in the user sector of the memory section 12 of the IC card 10 (S428).

When the lottery ticket information including the personal information, the details of the purchase, and the intrinsic purchase identification code has been stored in the IC card 10, the control section 21 of the terminal 20 displays a message inquiring if the user want to print the details of the purchase on the display section 23 (S429).

When the user of the IC card 10 selects through the input section 22 to print the details of the purchase, the control section 21 prints the details of the lottery ticket sold to the user by means of the printer section 29 (S430), and then completes the lottery ticket selling service (S431), so that the process is ended. On the other hand, when the user does not want to print the details of the purchase, the control section 21 instantly completes the lottery ticket selling service (S431) without through the step of printing the details of the purchase, and the process is ended.

In the lottery ticket selling service according to the third embodiment of the present invention as described above, not only the lottery ticket information including the personal information of the user, the details of the purchase, and the intrinsic purchase identification code is equally stored in the user sector of the memory section 12 of the IC card 10 and in the lottery ticket sale information storage section 34 of the service server 30, but also the cipher values for the card information and the card secret key generated in the IC card 10. generated in the service server 30 are stored in the lottery ticket sale information storage section 34 of the service server 30.

The information stored in the IC card 10 and the service server 30 while the lottery ticket selling service according to various embodiments of the present invention as described above is used in verifying the user's IC card when a winning reference service and a winnings payment service are carried out later.

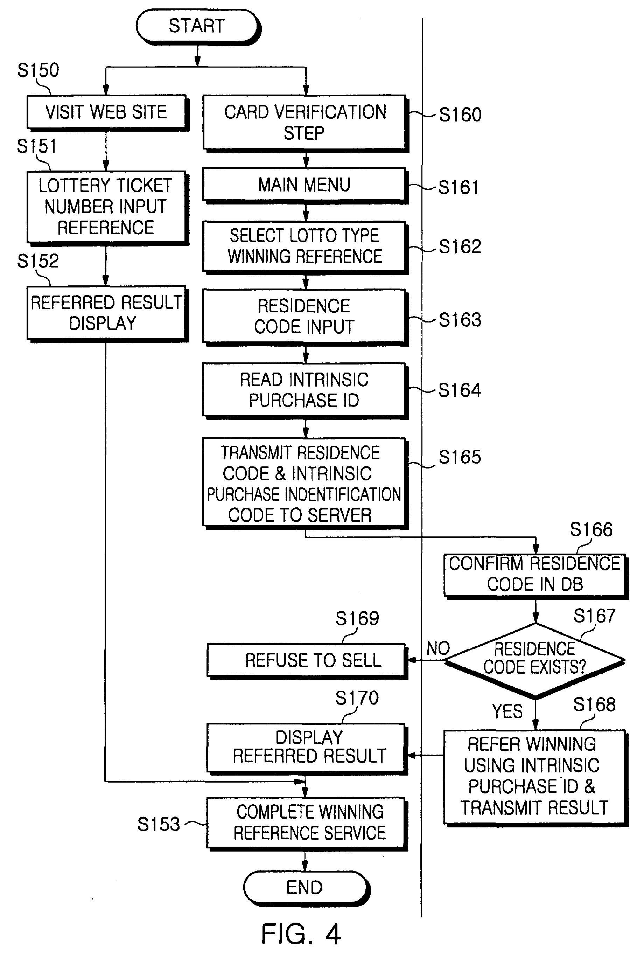

Hereinafter, the winning reference service of the lotto type lottery ticket will be described with reference to FIG. 4, which is a flow chart of the winning reference service by the lottery service system.

The winning reference service is employed in all of the cases where a user has purchased a lottery ticket according to the lottery ticket selling services provided by the first to third embodiments of the present invention.

In the winning reference service of the invention, there are a method of referring if the lottery ticket is a winning ticket by means of the IC card 10 used to buy the lottery ticket and a method of directly referring the number of the purchased lottery ticket in the web site of the service server 30 if they win.

First, the method of directly referring the number of the purchased lottery ticket in the web site of the service server 30 will be described hereinafter.

When the user inputs the web site of the service server 30 through the input section 22 of the terminal 20 (S150), the control section 21 of the terminal 20 displays a message requiring the user to input the number of the purchased lottery ticket on the display section 23 (S151).

When the user has inputted the number of the purchased lottery ticket through the input section 22, the control section 21 of the terminal 20 transmits the inputted number of the purchased lottery ticket to the service server 30, and then the control section 31 of the service server 30 refers the transmitted lottery ticket number if the lottery ticket is a winning ticket, and transmits the referred result to the terminal 20.

The control section 21 of the terminal 20 displays the referred result received from the service server 30 on the display section 23 (S152), and completes the winning reference service (S153), so that the process is ended.

Next, in the method of referring the winning of the lottery ticket by means of the IC card 10 used to buy the lottery ticket, when the user inserts the the IC card 10 into the terminal 20, the control section 21 of the terminal 20 carries out the card verification step (S160), in which the user□s IC card 10 is verified. In this case, a detailed description about the card verification step (S160) will be omitted, since it is the same as the card verification step (S100) in the lottery ticket selling service as shown in FIGs. 3A to 3C.

When the user□s IC card 10 is confirmed as a usable card as a result of the verification of the card, the control section 21 of the terminal 20 displays the main menu on the display section 23 (S161), and then the user selects the lotto type lottery ticket winning reference service through the input section 22 (S162).

Then, the control section 21 requires the user to input the user□s residence code through the display section 23 (S163). When the user□s residence code is inputted through the input section 22, the control section 21 controls the card reader section 24 to read the intrinsic purchase identification code stored in the user sector of the memory section 12 of the IC card 10 (S164).

Next, the control section 21 transmits the residence code inputted through the input section 22 and the intrinsic purchase identification code read in the card reader section 24 to the service server 30 through the communication section 28 (S165).

In the meantime, the control section 31 of the service server 30 searches for the residence code, received through the communication section 33 from the terminal 20, from the lottery ticket information stored in the lottery ticket sale information storage section 34 as a database (S166), so as to confirm if there is the inputted residence code (S167).

When the residence code exists in the the lottery ticket sale information storage section 34 as a result of the confirmation, the control section 31 confirms the lottery ticket information stored in the lottery ticket sale information storage section 34 by means of the received intrinsic purchase identification code, so as to refer if the lottery ticket sold to the user is a winning ticket, and then transmits the referred result to the terminal 20 (S168).

The control section 21 of the terminal 20 displays a predetermined message on the display section 23 according to the referred result received from the service server 30.

That is, when the residence code inputted through the input section 22 by the user does not exist in the lottery ticket sale information storage section 34 of the service server 30, the control section 21 of the terminal 20 displays a message refusing to sell the lottery ticket on the display section 23 (S169).

On the other hand, when the residence code inputted through the input section 22 by the user exists, the control section 21 of the terminal 20 displays the result obtained by referring the winning by means of the intrinsic purchase identification code on the display section 23 (S170), and completes the winning reference service (S153), so that the process is ended.

As described above, the user, who has purchased the lottery ticket by means of the IC card 10, refers if the lottery ticket is a winning ticket by means of the residence code and the intrinsic purchase identification code stored in the IC card 10.

Next, when the winning has been confirmed in the previous winning reference service stage, the purchaser of the lottery ticket can utilize a winnings payment service, in which the winnings are paid to the winner, that is, the purchaser.

In this case, the winnings of the lottery ticket are classified into large winnings and small winnings, and the small winnings payment service may have a simpler confirmation process in comparison with the small winnings payment service. Further, the large winnings may follow a predetermined criterion, e.g., the large winnings may mean that the lottery ticket wins the first prize or the second prize.

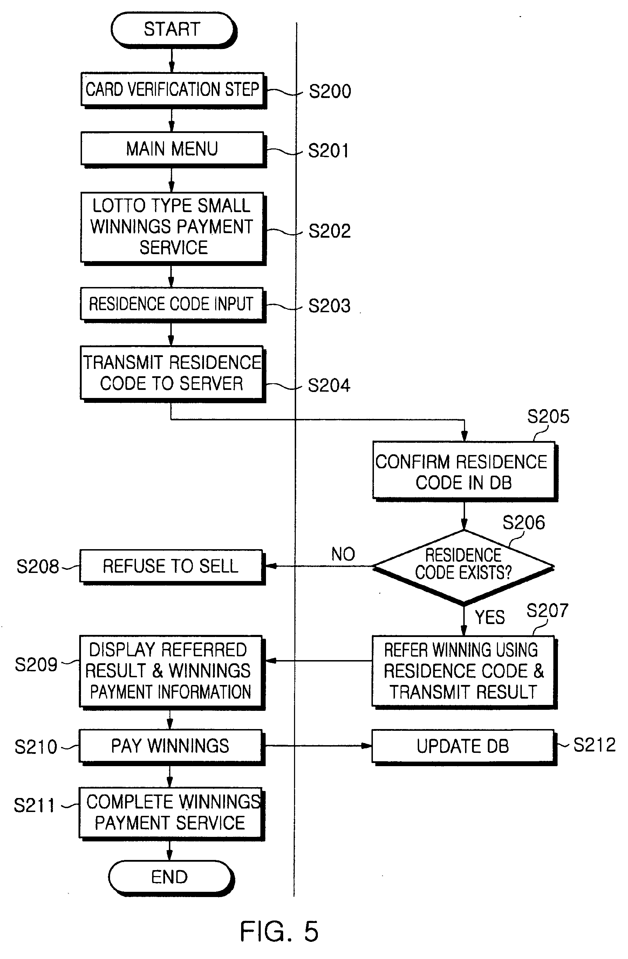

At first, in the small winnings payment service of the lotto type lottery ticket as shown in FIG. 5, when the winner, who want the winnings to be paid, has inserted the IC card 10 used in purchasing the lottery ticket into the terminal 20, a card verification step (S200) is carried out to verify the user□s IC card 10, which will not be described in detail since the card verification step (S200) is the same as the card verification step (S100) in the lottery ticket selling service as shown in FIGs. 3A to 3C.

When the user□s IC card 10 is confirmed as a usable card in the card verification step (S200), the control section 21 of the terminal 20 displays the main menu on the display section 23 (S201), and then the user selects the lotto type lottery ticket small winnings payment service through the input section 22 (S202).

Then, the control section 21 displays a message requiring the user to input the user□s residence code on the display section 23 (S203), and transmits the user□s residence code, which is inputted through the input section 22, to the service server 30 through the communication section 28 (S204).

In the meantime, the control section 31 of the service server 30 searches for the residence code, which is received from the terminal 20, from the lottery ticket information stored in the lottery ticket sale information storage section 34 (S205), so as to confirm if there exists the received residence code (S206).

When the residence code exists as a result of the confirmation, the control section 31 confirms the lottery ticket information stored in the lottery ticket sale information storage section 34 by means of the residence code, so as to refer if the lottery ticket sold to the user is a winning ticket, and then transmits the referred result to the terminal 20 (S207).

The control section 21 of the terminal 20 displays a predetermined message on the display section 23 according to the referred result received from the service server 30.

That is, when the residence code inputted through the input section 22 by the user does not exist in the lottery ticket sale information storage section 34 of the service server 30, the control section 21 of the terminal 20 displays a message refusing to sell the lottery ticket on the display section 23 (S208).

On the other hand, when the residence code inputted through the input section 22 by the user exists, the control section 21 of the terminal 20 displays the referred result, obtained by referring the winning by means of the residence code, and the winnings payment information, such as the account number, contained in the personal information inputted by the user when the lottery ticket is sold, on the display section 23 (S209). Then, the winnings are paid according to the winnings payment information (S210), and the winning reference service is completed (S211). Then, the process is ended.

In this case, the control section 21 of the terminal 20 transmits the winnings payment information to the service server 30 when the winnings have been paid, and the control section 31 of the service server 30 stores the winnings payment information in the lottery ticket sale information storage section 34, so as to update the lottery ticket information (S212). This step is arranged in order to prevent the winnings from being doubly paid.

As described above, when the winnings are a small amount of money, that is, in the case of the small winnings, the winning is referred by means of the user□s residence code so that the winnings are paid. However, when the winnings are a large amount of money, that is, in the case of the large winnings, there are several ways of confirming the winning or the winner according to embodiments of the present invention.

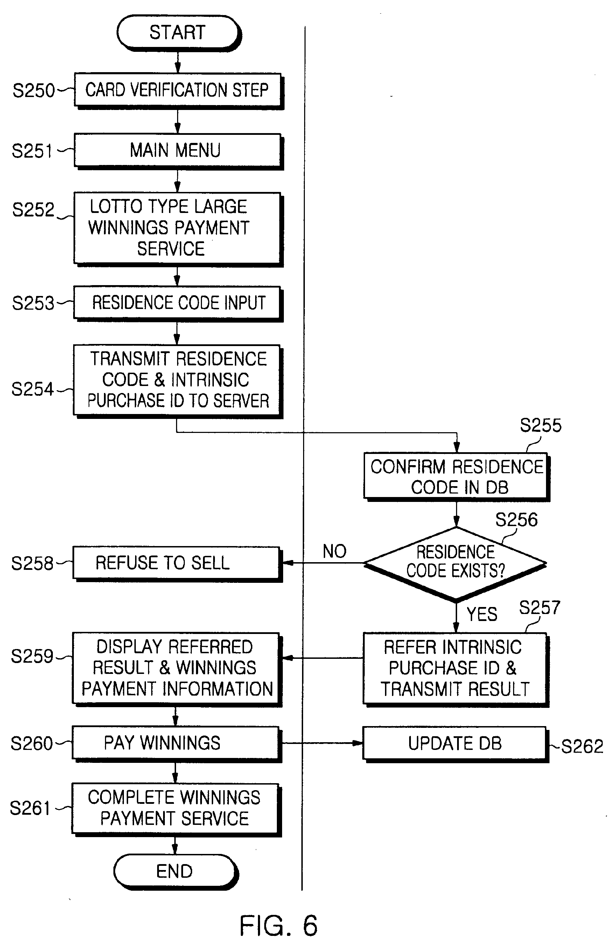

In more detailed description, in the case where the lottery ticket sold according to the first embodiment of the present invention wins the large winnings, the winnings are paid in the way as shown in FIG. 6.

First, the control section 21 of the terminal 20 carries out a card verification step (S250), and then displays the main menu on the display section 23 when the IC card 10 has been confirmed as a usable normal card (S251).

The user selects the lotto type lottery ticket large winnings payment service through the input section 22 (S252), and the control section 21 displays a message requiring the user to input the user□s residence code on the display section 23 (S253).

When the user has inputted the user□s residence code through the input section 22, the control section 21 controls the card reader section 24 to read the intrinsic purchase identification code stored in the IC card 10, and transmits the inputted user□s residence code and the read intrinsic purchase identification code to the service server 30 through the communication section 28 (S254).

In the meantime, the control section 31 of the service server 30 searches for the residence code, which is received through the communication section 33 from the terminal 20, from the lottery ticket information stored in the lottery ticket sale information storage section 34 (S255), so as to confirm if there exists the received residence code (S256).

When the residence code exists as a result of the confirmation, the control section 31 confirms the lottery ticket information stored in the lottery ticket sale information storage section 34 by means of the intrinsic purchase code received from the terminal 20, so as to refer if the lottery ticket sold to the user is a winning ticket, and then transmits the referred result to the terminal 20 (S257).

The control section 21 of the terminal 20 displays a predetermined message on the display section 23 according to the referred result received from the service server 30.

That is, when the residence code inputted through the input section 22 by the user does not exist in the lottery ticket sale information storage section 34 of the service server 30, the control section 21 of the terminal 20 displays a message refusing to sell the lottery ticket on the display section 23 (S258).

On the other hand, when the residence code inputted through the input section 22 by the user exists, the control section 21 of the terminal 20 displays the referred result, obtained by referring the winning by means of the residence code, and the winnings payment information, contained in the personal information inputted by the user when the lottery ticket is sold, on the display section 23 (S259). Then, the winnings are paid according to the winnings payment information (S260), and the winning reference service is completed (S261). Then, the process is ended.

In this case, the control section 21 of the terminal 20 transmits the winnings payment information to the service server 30 when the winnings have been paid, and the control section 31 of the service server 30 stores the winnings payment information in the lottery ticket sale information storage section 34, so as to update the lottery ticket information (S262).

Accordingly, the winnings are paid only when, not only the residence codes inputted by the user respectively when the lottery ticket is sold and when the winnings are paid are the same, but also the intrinsic purchase code stored in the IC card 10 is the same as the already stored intrinsic purchase code.

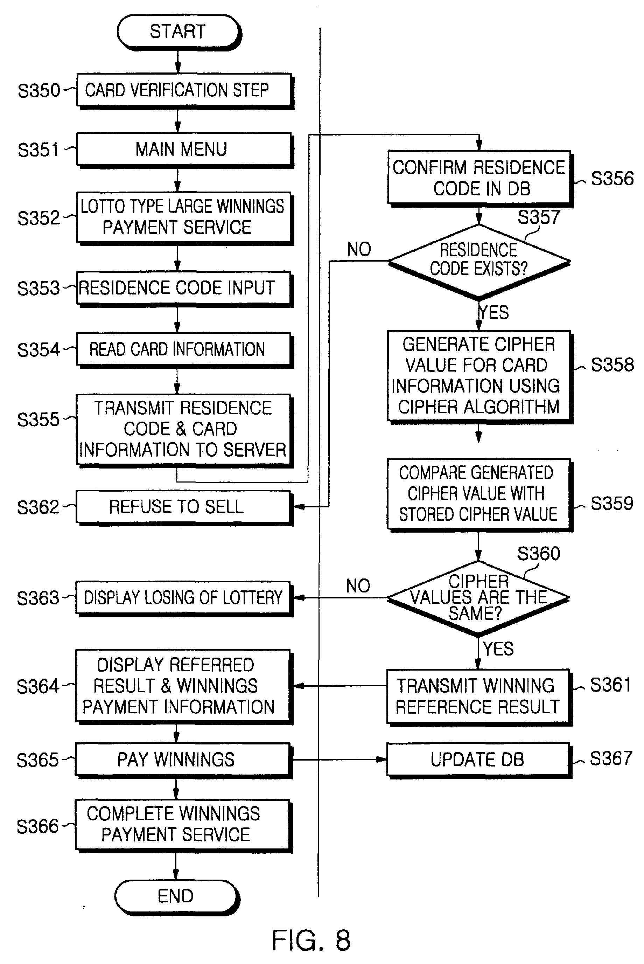

In the meantime, in the case where the lottery ticket sold according to the second embodiment of the present invention wins the large winnings, the winnings are paid in the way as shown in FIG. 8.

First, the control section 21 of the terminal 20 carries out a card verification step (S350) in which if the card is usable is confirmed, and then displays the main menu on the display section 23 (S351).

The user selects the lotto type lottery ticket large winnings payment service from the main menu by means of the input section 22 (S352), and the control section 21 displays a message, which requires the user to input the user residence code, on the display section 23 (S353).

When the user has inputted the user residence code through the input section 22, the control section 21 controls the card reader section 24 to read the card information stored in the memory section 12 when the IC card 10 is issued (S354), and transmits the inputted residence code and the read card information to the service server 30 through the communication section 28 (S355).

In the meantime, the control section 31 of the service server 30 searches for the residence code, which is received through the communication section 33 from the terminal 20, from the lottery ticket information stored in the lottery ticket sale information storage section 34 (S356), so as to confirm if there exists the received residence code (S357).

When the residence code exists as a result of the confirmation, the cipher algorithm section 36 generates a cipher value for the card information received from the terminal 20, according to the control of the control section 31 (S358). When the residence code does not exist, the inexistence of the residence code is reported to the terminal 20.

The lottery ticket purchaser verification section 37 compares the cipher value generated in the step S358 with the cipher value contained in the lottery ticket information stored in the lottery ticket sale information storage section 34 (S359), so as to judge if they are the same (S360). In this case, the cipher value stored in the lottery ticket sale information storage section 34 is a value generated when the lottery ticket selling service is carried out according to the second embodiment of the present invention as shown in FIG. 7.

As a result of the comparison, when the cipher value generated for the card information read in the IC card 10 is equal to the cipher value already stored in the lottery ticket sale information storage section 34, the IC card 10 used when the lottery ticket is sold is understood to be the same as the IC card 10 used when the winnings are paid, and therefore the control section 31 confirms the lottery ticket information stored in the lottery ticket sale information storage section 34, so as to refer if the lottery ticket sold to the user is a winning ticket, and then transmits the referred result to the terminal 20 (S361).

The control section 21 of the terminal 20 displays a predetermined message on the display section 23 according to the referred result received from the service server 30.

That is, when the residence code inputted through the input section 22 by the user does not exist in the lottery ticket sale information storage section 34 of the service server 30, the control section 21 of the terminal 20 displays a message refusing to sell the lottery ticket on the display section 23 (S362).

Further, when the cipher values are not the same as a result of the comparison in the step S360 in which the cipher values are compared if they are the same in the service server 30, the control section 21 of the terminal 20 displays a message informing a losing of the lottery on the display section 23 (S363).

When the cipher values are the same as a result of the comparison in the step S360 in which the cipher values are compared if they are the same in the service server 30, the control section 21 of the terminal 20 displays the referred result, obtained by referring the winning by means of the residence code, and the winnings payment information, inputted by the user when the lottery ticket is sold, on the display section 23 (S364). Then, the winnings are paid according to the winnings payment information (S365), and the winning reference service is completed (S366). Then, the process is ended.

In this case, the control section 21 of the terminal 20 transmits the winnings payment information to the service server 30 when the winnings have been paid, and the control section 31 of the service server 30 stores the winnings payment information in the lottery ticket sale information storage section 34, so as to update the lottery ticket information (S367).

Accordingly, the winnings are paid only when, not only the residence codes inputted by the user respectively when the lottery ticket is sold and when the winnings are paid are the same, but also the cipher value generated for the card information stored in the IC card 10 is equal to the cipher value already stored in the lottery ticket sale information storage section 34.

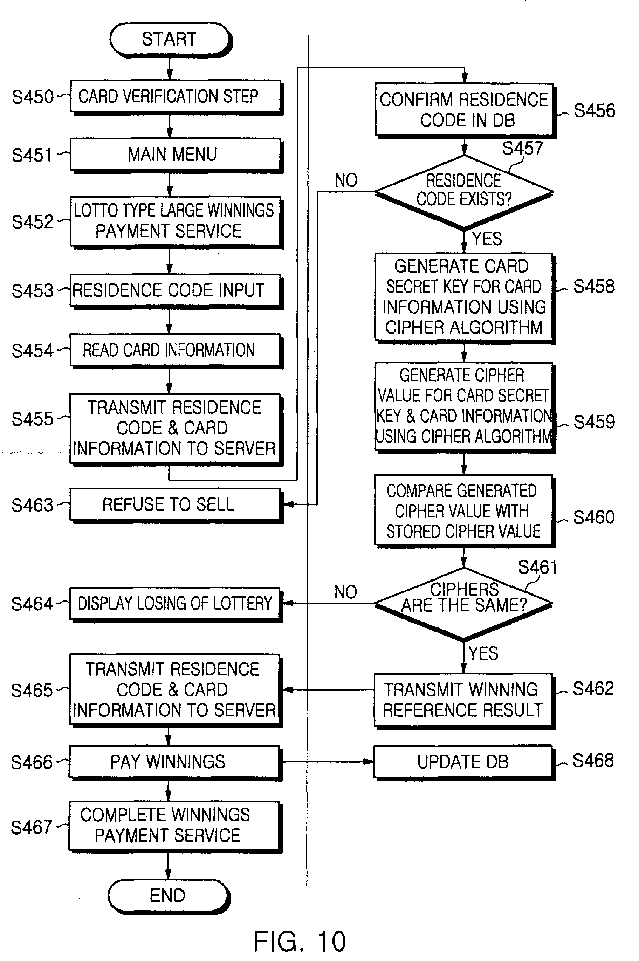

Meanwhile, in the case where the lottery ticket sold according to the third embodiment of the present invention wins the large winnings, the winnings are paid in the way as shown in FIG. 10.

First, the control section 21 of the terminal 20 carries out a card verification step (S450) in which if the IC card 10 is usable is confirmed, and then displays the main menu on the display section 23 (S451).

The user selects the lotto type lottery ticket large winnings payment service from the main menu by means of the input section 22 (S452), and the control section 21 displays a message requiring the user to input the users residence code on the display section 23 (S453).

When the user has inputted the residence code through the input section 22, the control section 21 controls the card reader section 24 to read the card information stored in the memory section 12 when the IC card 10 is issued (S454), and transmits the inputted residence code and the read card information to the service server 30 through the communication section 28 (S455).

In the meantime, the control section 31 of the service server 30 searches for the residence code, which is received through the communication section 33 from the terminal 20, from the lottery ticket information stored in the lottery ticket sale information storage section 34 (S456), so as to confirm if there exists the received residence code (S457).

When the residence code exists as a result of the confirmation, the cipher algorithm section 36 generates a card secret key by means of the card information received from the terminal 20, according to the control of the control section 31 (S458), and generates a cipher value for the generated card secret key and the card information (S459).

Further, the lottery ticket purchaser verification section 37 compares the cipher value generated in the cipher algorithm section 36 with the cipher value contained in the lottery ticket information stored in the lottery ticket sale information storage section 34 (S460), so as to judge if they are the same (S461). In this case, the cipher value stored in the lottery ticket sale information storage section 34 is a value generated by the IC card 10 when the lottery ticket selling service is carried out according to the third embodiment of the present invention as shown in FIG. 9.

As a result of the comparison, when the cipher value generated in the service server 30 is equal to the cipher value already stored in the lottery ticket sale information storage section 34, the control section 31 confirms the lottery ticket information stored in the lottery ticket sale information storage section 34, so as to refer if the lottery ticket sold to the user is a winning ticket, and then transmits the referred result to the terminal 20 (S462).

The control section 21 of the terminal 20 displays a predetermined message on the display section 23 according to the referred result received from the service server 30.

That is, when the residence code inputted through the input section 22 by the user does not exist in the lottery ticket sale information storage section 34 of the service server 30, the control section 21 of the terminal 20 displays a message refusing to sell the lottery ticket on the display section 23 (S463).

Further, when the cipher values are not the same as a result of the comparison in the step S461 in which the cipher values are compared by the service server 30 if they are the same, the control section 21 of the terminal 20 displays a message informing a losing of the lottery on the display section 23 (S464).

When the cipher values are the same as a result of the comparison in the step S360 in which the cipher values are compared if they are the same in the service server 30, the control section 21 of the terminal 20 displays the referred result, obtained by referring the winning by means of the residence code, and the winnings payment information, selected by the user when the lottery ticket is sold, on the display section 23 (S465). Then, the winnings are paid according to the winnings payment information (S466), and the winning reference service is completed (S467). Then, the process is ended.

In this case, the control section 21 of the terminal 20 transmits the winnings payment information to the service server 30 when the winnings have been paid, and the control section 31 of the service server 30 stores the winnings payment information in the lottery ticket sale information storage section 34, so as to update the lottery ticket information (S468).

Therefore, the winnings are paid only when, not only the residence codes inputted by the user respectively when the lottery ticket is sold and when the winnings are paid are the same, but also the card information stored in the IC card 10 is equal to the cipher value generated for the card secret key.

### <INSTANT TYPE LOTTERY SERVICE>

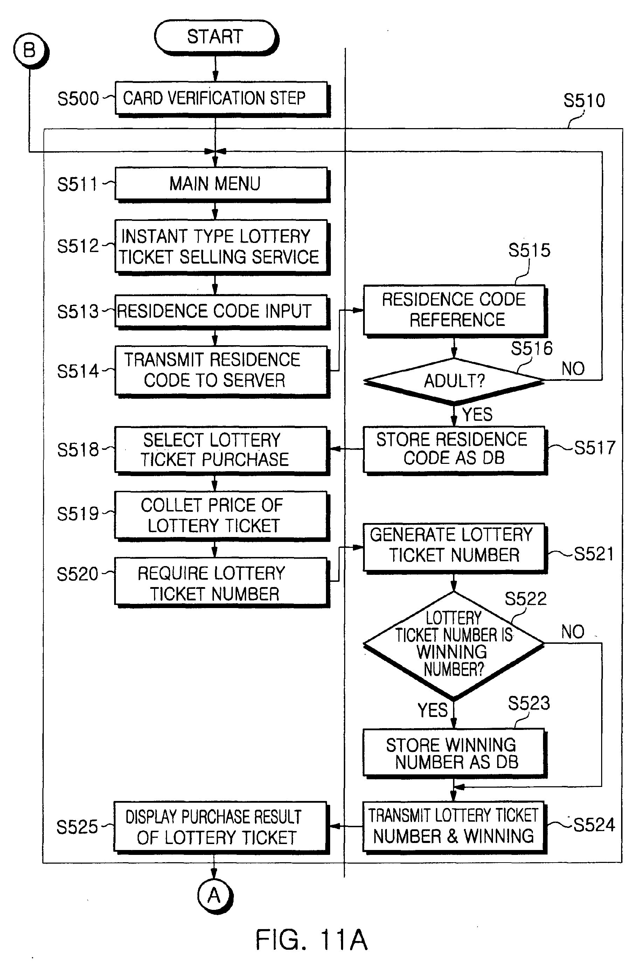

FIGs. 11A to 20 are flow charts for showing various instant type lottery services according to several embodiments of the present invention. The system for providing the instant type lottery services provides a lottery ticket selling service, in which if a purchased lottery ticket is a winning ticket is confirmed, and a winnings payment service, in which the winnings are paid.

The lottery ticket selling service comprises a card verification step in which the genuineness of the IC card 10 used in purchasing a lottery ticket is examined, an instant type lottery ticket selling step in which the lottery ticket is sold according to a request by a user of the IC card 10, and a winnings-payment-requirement-setting step in which requirements for paying winnings when the sold lottery ticket is a winning ticket are set.

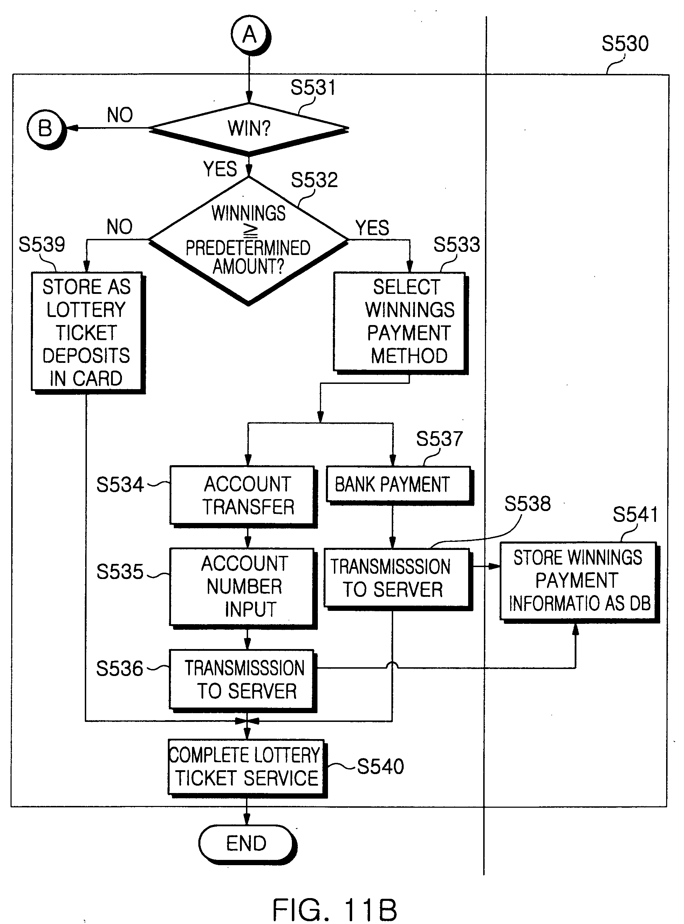

First, in a lottery ticket selling service according to a fourth embodiment of the present invention as shown in FIGs. 11A and 11B, the control section 21 of the terminal 20 carries out a card verification step (S500), in which the IC card 10 used in purchasing the lottery ticket is examined if it is normal, and a detailed description of which will be omitted since the step S500 is the same as the card verification step (S100) according to the first embodiment of the present invention as shown in FIGs. 3A to 3C.

When the IC card 10 inserted in the terminal 20 in the card verification step (S500) is confirmed as a usable normal card, the instant type lottery ticket selling step (S510), in which the instant type lottery ticket is sold, is carried out.

In the instant type lottery ticket selling step (S510), the control section 21 of the terminal 20 displays a main menu, from which various kinds of service items provided by the lottery service can be selected, on the display section 23 (S511).

Then, the user chooses the instant type lottery ticket selling service from the main menu by means of the input section 22 (S512), the control section 21 of the terminal 20 displays a message requiring the user to input the users residence code on the display section 23 (S513).

When the users residence code has been inputted through the input section 22, the control section 21 transmits the inputted residence code through the communication section 28 to the service server 30 (S514).

In the meantime, when the residence code has been received through the communication section 33 from the terminal 20, the control section 31 of the service server 30 refers the inputted residence code (S515), so as to verify if the user of the IC card 10, who want to buy the lottery ticket by means of the terminal 20, is an adult (S516).

When the user of the IC card 10 is an adult as a result of the verification, the lottery ticket sale information storage section 34 stores the inputted residence code as a database, according to the control of the control section 31 (S517), and transmits the verified result of the residence code to the terminal 20.

When the user of the IC card 10 is not an adult according to the verified result of the residence code received through the communication section 28, the control section 21 of the terminal 20 displays a message of refusing to sell the lottery ticket because the user of the IC card 10 is not an adult, and then returns the process to the step S511, in which the main menu is displayed again. When the user of the IC card 10 is an adult, the control section 21 displays a message requiring the user to select the kind of the lottery ticket he or she want to buy (S518).

When the user selects the instant type lottery ticket purchase displayed on the display section 23 by means of the input section 22, the control section 21 controls the card reader section 24 to collect the price of the sold lottery ticket by balancing the price from the lottery ticket dedicated fund stored in the user sector of the memory section 12 of the IC card 10 (S519), and transmits an order requiring the lottery ticket number to the service server 30 through the communication section 28 (S520).

In the meantime, the control section 31 of the service server 30 controls the lottery ticket information generation section 35 to generate the lottery ticket number according to the request for the lottery ticket number received through the communication section 33 from the terminal 20 (S521), and confirms if the lottery ticket number is a winning number (S522).

As a result of the confirmation, when the generated lottery ticket number is the winning number, the control section 31 stores the winning number in the lottery ticket sale information storage section 34 as a database (S523), and transmits the generated lottery ticket number together with the winning of the lottery ticket to the terminal 20 (S524).

Further, as a result of the confirmation in the step S522, when the generated lottery ticket number is not the winning number, the control section 31 transmits the fact that the lottery ticket is a losing ticket, together with the lottery ticket number, to the terminal 20 (S524).

The control section 21 of the terminal 20 displays the lottery ticket purchase result, including the lottery ticket number and the winning or the losing of the lottery ticket received through the communication section 28 from the service server 30, on the display section 23 (S525).

After the instant type lottery ticket selling step (S510) is completed in the way as described above, and when the sold instant type lottery ticket is a winning ticket, a winnings-payment-requirement-setting step (S530) is carried out.

In detailed description, the control section 21 of the terminal 20 confirms if the lottery ticket number purchased by the user is a winning number (S531). When the lottery ticket is not the winning number, the process returns to the step S511, in which the main menu is displayed again. When the lottery ticket is the winning number, the control section 21 confirms if the winnings for the winning lottery ticket exceed a predetermined amount of money (S532). In this case, the predetermined amount of money is criterion information preset in the terminal 20.

As a result of the confirmation, when the winnings exceed the predetermined amount of money, the control section 21 guides the user to select a winnings payment method through the display section 23.

The user selects a method of receiving the winnings by means of the input section 22, according to the guide of the winnings payment methods displayed on the display section 23 (S533).

When the user selects an account transfer as the method of receiving the winnings by means of the input section 22 (S534), and inputs an account number (S535), the control section 21 transmits the inputted account transfer information through the communication section 28 to the service server 30 (S536).

On the other hand, when the user selects a bank payment as the method of receiving the winnings by means of the input section 22 (S537), the control section 21 transmits the inputted bank payment information to the service server 30 (S538).

Further, when the winnings do not exceed the predetermined amount of money in the step S532, in which if the winnings for the winning lottery ticket exceed a predetermined amount of money is confirmed, the control section 21 controls the card reader section 24 to store the winnings in the user sector of the memory section 12 of the IC card 10 as lottery ticket deposits (S539). In this case, the lottery ticket deposits stored in the IC card 10 is reported to the user when the balance in the card is displayed in the card verification step.

Thereafter, the control section 21 of the terminal 20 completes the lottery ticket selling service (S540), and then the process is ended.

In the meantime, the control section 31 of the service server 30 stores the winnings payment information, which is received through the communication section 33 from the terminal 20, in the lottery ticket sale information storage section 34 (S541).

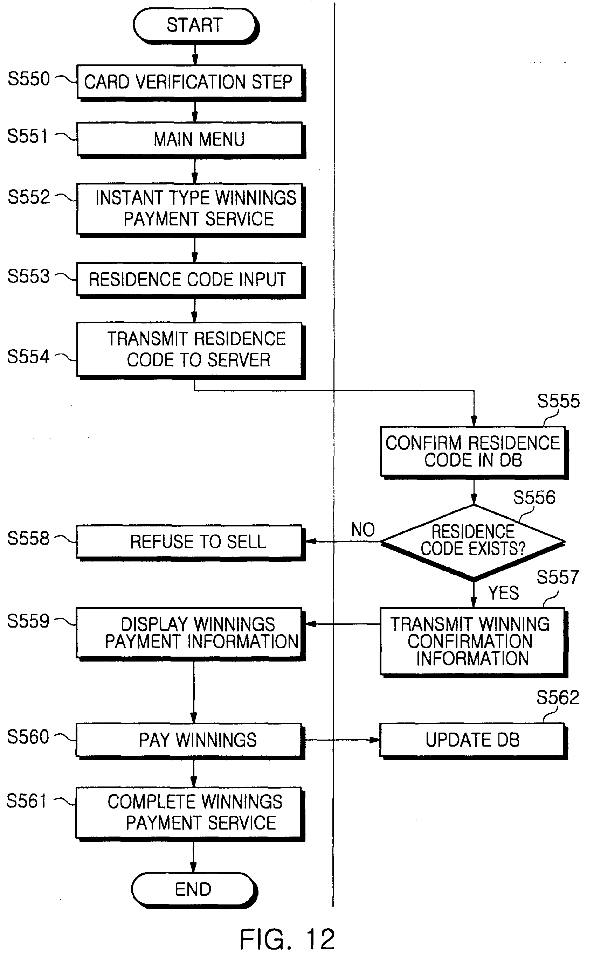

When the lottery ticket purchased by means of the lottery ticket selling service is a winning ticket and the user selects the bank payment from the various winnings payment service, that is, when the winner selects the bank payment from the process of selecting a method of receiving the winnings in the step S533 of FIG. 11B, he or she can be paid the winnings from a designated bank according to a process of the winnings payment service as shown in FIG. 12, which will be described hereinafter.

First, the control section 21 of the terminal 20 carries out a card verification step (S550), in which if the IC card 10 is normal is confirmed, and then displays the main menu on the display section 23 (S551).

The user selects an instant type lottery winnings payment service from the main menu through the input section 22 (S552), and the control section 21 displays a message requiring the user to input his or her residence code on the display section 23 (S553).

The control section 21 transmits the residence code, which the user inputted through the input section 22, to the service server 30 through the communication section 28 (S554).

In the meantime, the control section 31 of the service server 30 searches for the residence code, which is received through the communication section 33 from the terminal 20, from the lottery ticket information stored as a database in the lottery ticket sale information storage section 34 (S555), so as to confirm if there exists the residence code (S556).

When the residence code exists in the lottery ticket sale information storage section 34 as a result of the confirmation, the control section 31 confirms the lottery ticket information stored in the lottery ticket sale information storage section 34, so as to refer if the lottery ticket sold to the user is a winning ticket, and then transmits a winning confirmation information to the terminal 20 (S557). In this case, the winning confirmation information includes the lottery ticket number, winning or losing of the lottery ticket, and the winnings payment information.

The control section 21 of the terminal 20 displays a predetermined message on the display section 23 according to the referred result received from the service server 30.

That is, when the residence code inputted through the input section 22 by the user does not exist in the lottery ticket sale information storage section 34 of the service server 30, the control section 21 of the terminal 20 displays a message refusing to sell the lottery ticket on the display section 23 (S558).

On the other hand, when the residence code inputted through the input section 22 by the user exists in the lottery ticket sale information storage section 34 of the service server 30, the control section 21 of the terminal 20 displays the referred result, obtained by referring the winning or the losing, and the winnings payment information, selected by the user when the lottery ticket is sold, on the display section 23 (S559). Then, the winnings are paid according to the winnings payment information (S560), and the winning reference service is completed (S561). Then, the process is ended.

In this case, the control section 21 of the terminal 20 transmits the winnings payment information to the service server 30 when the winnings have been paid, and the control section 31 of the service server 30 stores the winnings payment information in the lottery ticket sale. information storage section 34, so as to update the lottery ticket information (S562).

In this case, the payment of the winnings by the way of the bank payment does not necessarily have to follow the process as described above; but the winnings can be paid, for example, by utilizing a method, in which the service server reports the information in relation to the winning of the lottery ticket directly to a bank designated by the winner.

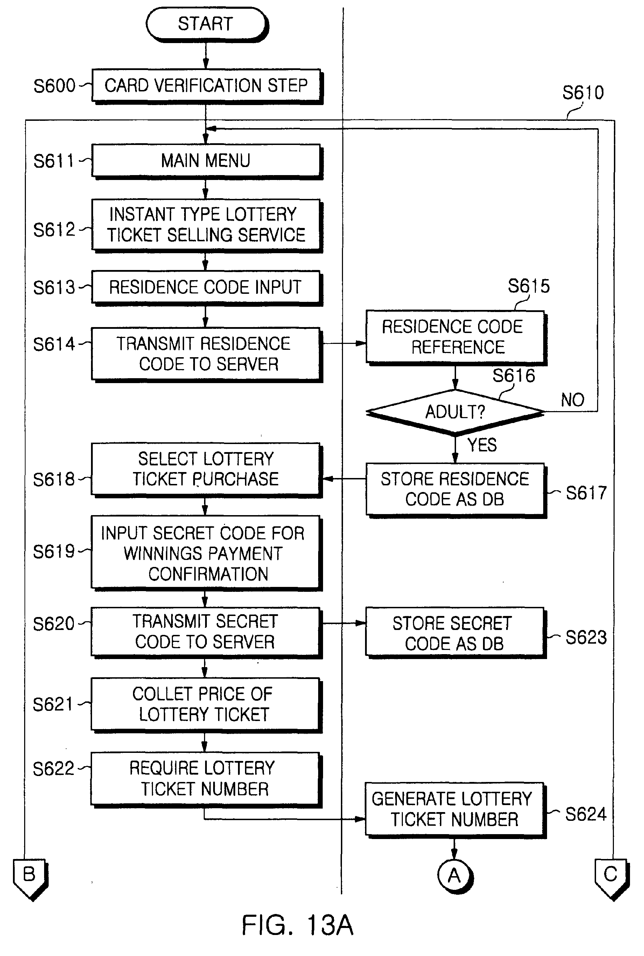

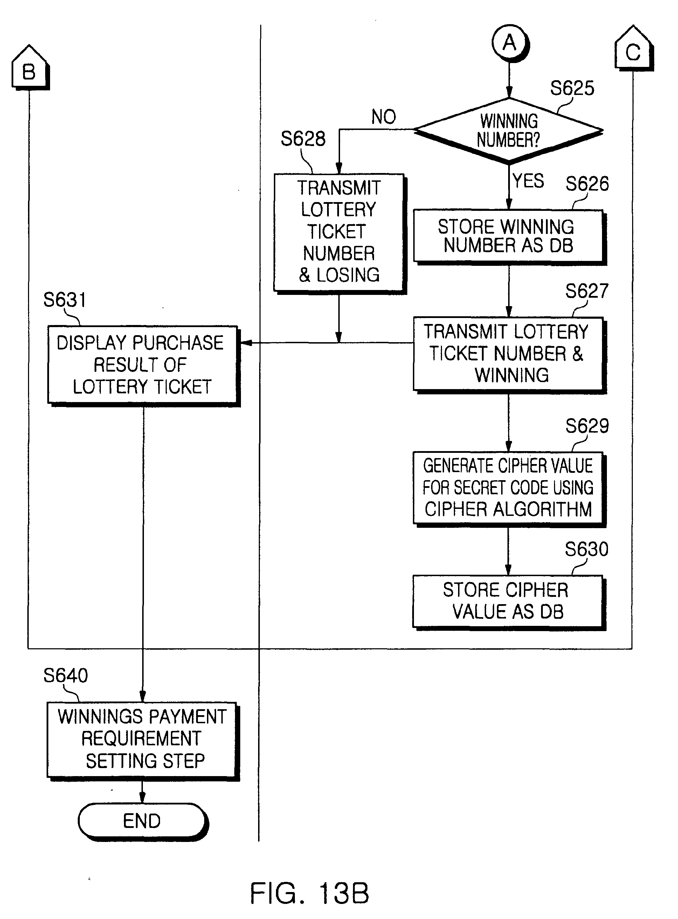

Meanwhile, in a lottery ticket selling service according to a fifth embodiment of the present invention as shown in FIGs. 13A and 13B, the control section 21 of the terminal 20 carries out an instant type lottery ticket selling step (S610), after carrying out a card verification step (S600), in which the IC card 10 used in purchasing the lottery ticket is verified.

In the instant type lottery ticket selling step (S610), the control section 21 of the terminal 20 displays a main menu (S611), and then the user chooses the instant type lottery ticket selling service from the main menu by means of the input section 22 (S612), and inputs the user□s residence code according to the requirement to input the user□s residence code displayed on the display section 23 (S613).

The control section 21 transmits the residence code, inputted by the user, through the communication section 28 to the service server 30 (S614).

In the meantime, when the residence code has been received through the communication section 33 from the terminal 20, the control section 31 of the service server 30 refers the inputted residence code (S615), so as to verify if the user of the IC card 10, who want to buy the lottery ticket by means of the terminal 20, is an adult (S616).

When the user of the IC card 10 is an adult as a result of the verification, the lottery ticket sale information storage section 34 stores the inputted residence code as a database, according to the control of the control section 31 (S617), and transmits the verified result of the residence code to the terminal 20.

The control section 21 returns the process to the step S611, in which the main menu is displayed again, when the user of the IC card 10 is not an adult according to the verified result of the residence code received through the communication section 28, while the control section 21 displays a message requiring the user to select the kind of the instant type lottery ticket he or she want to buy, when the user of the IC card 10 is an adult (S618).

When the user selects the instant type lottery ticket purchase displayed on the display section 23 by means of the input section 22, the control section 21 controls the display section 23 to require the user to input a secret code for confirming the user when the winnings are paid to the user (S619), and transmits the secret code, which has been inputted through the input section 22 by the user, through the communication section 28 to the service server 30 (S620).

After transmitting the secret code to the service server 30, the control section 21 controls the card reader section 24 to collect the price of the sold lottery ticket by balancing the price from the lottery ticket dedicated fund stored in the user sector of the memory section 12 of the IC card 10 (S621), and transmits an order requiring the lottery ticket number to the service server 30 through the communication section 28 (S622).

In the meantime, the control section 31 of the service server 30 stores the secret code, received through the communication section 33 from the terminal 20, in the lottery ticket sale information storage section 34 as a database (S623) and controls the lottery ticket information generation section 35 to generate the lottery ticket number according to the request for the lottery ticket number received through the communication section 33 from the terminal 20 (S624), and confirms if the lottery ticket number is a winning number (S625).

As a result of the confirmation, when the generated lottery ticket number is the winning number, the control section 31 stores the winning number in the lottery ticket sale information storage section 34 as a database (S626), and transmits the generated lottery ticket number together with the winning of the lottery ticket to the terminal 20 (S624). In this case, when the generated lottery ticket number is not the winning number, the control section 31 transmits the fact that the lottery ticket is a losing ticket, together with the generated lottery ticket number, to the terminal 20 (S628).

Further, when the generated lottery ticket number is the winning number, the control section 31 transmits the fact to the terminal 20, and then controls the cipher algorithm section 36 to generate a cipher value for the secret code inputted by the user (S629) and stores the generated cipher value in the lottery ticket sale information storage section 34 (S630).

The control section 21 of the terminal 20 displays the lottery ticket purchase result, including the lottery ticket number and the winning or the losing of the lottery ticket received through the communication section 28 from the service server 30, on the display section 23 (S631).

When the instant type lottery ticket selling step (S610) has been completed in the way as described above, the winnings-payment-requirement-setting step (S640), in which requirements to pay the winnings when the sold instant type lottery ticket is a winning ticket are set, is carried out, and a detailed description of the step S640 will be omitted since it is the same as the winnings-payment-requirement-setting step (S530) shown in FIG. 11B.

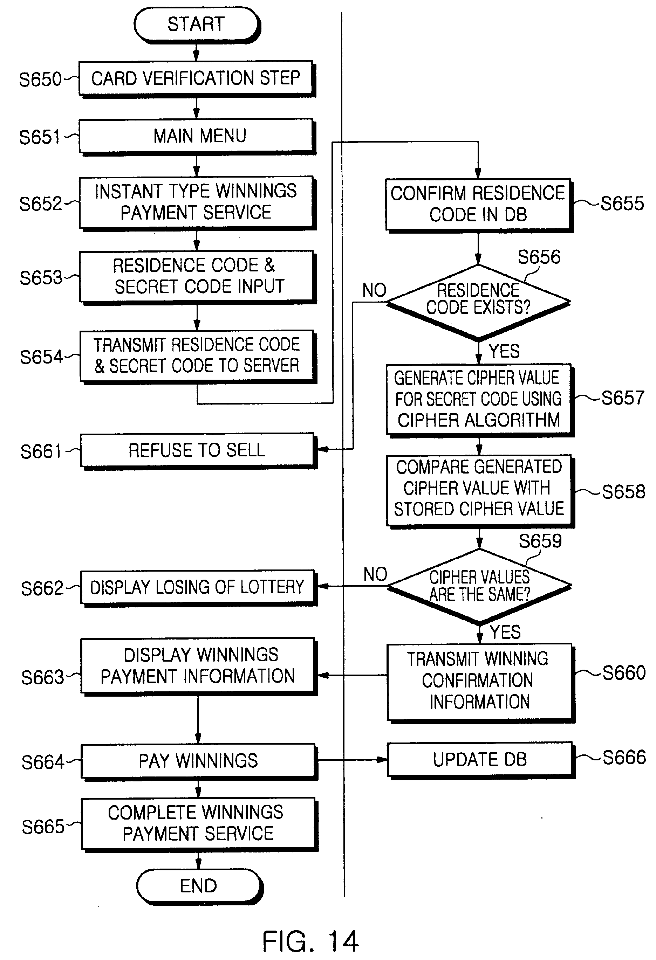

When the lottery ticket purchased by means of the lottery ticket selling service is a winning ticket and the user selects the bank payment from the various winnings payment service, the user can receive the winnings from a designated bank according to a process of the winnings payment service as shown in FIG. 14, which will be described hereinafter.

Referring to FIG. 14, the control section 21 of the terminal 20 carries out a card verification step (S650), in which if the IC card 10 is normal is confirmed, and then displays the main menu on the display section 23 (S651).

When the user selects an instant type lottery winnings payment service from the main menu by means of the input section 22 (S652), the control section 21 displays a message, which requires the user to input the users residence code and the secret code when buying the lottery ticket, on the display section 23 (S653).

The control section 21 transmits the residence code and the secret code, which the user inputted through the input section 22, to the service server 30 through the communication section 28 (S654).

In the meantime, the control section 31 of the service server 30 searches for the residence code, received through the communication section 33 from the terminal 20, from the lottery ticket information stored as a database in the lottery ticket sale information storage section 34 (S655), so as to confirm if there exists the residence code (S656).

When the residence code exists in the lottery ticket sale information storage section 34 as a result of the confirmation, the control section 31 controls the cipher algorithm section 36 to generate a cipher value for the secret code inputted by the user (S657), and the lottery ticket purchaser verification section 37 compares the generated cipher value with the cipher value already stored in the lottery ticket sale information storage section 34 (S658), so as to judge if the cipher values are the same (S659). In this case, the cipher value already stored in the lottery ticket sale information storage section 34 is a cipher value generated with respect to the secret code inputted by the user when the lottery ticket is sold.

As a result of the judgment, when the cipher values are the same, the control section 31 confirms the lottery ticket information stored in the lottery ticket sale information storage section 34 so as to refer the winning or the losing of the lottery ticket sold to the user, and transmits the winning confirmation information to the terminal 20 (S660).

The control section 21 of the terminal 20 displays a predetermined message on the display section 23 according to the referred result received from the service server 30.

That is, when the residence code inputted through the input section 22 by the user does not exist in the lottery ticket sale information storage section 34 of the service server 30, the control section 21 of the terminal 20 displays a message refusing to sell the lottery ticket on the display section 23 (S661).

Further, when the cipher value generated for the secret code inputted through the input section 22 by the user is not the same as the cipher value already stored in the lottery ticket sale information storage section 34, the control section 21 displays a message of reporting the lottery ticket is not the winning ticket on the display section 23 (S662).

On the other hand, when the cipher value generated for the secret code inputted through the input section 22 by the user is the same as the cipher value already stored in the lottery ticket sale information storage section 34, the control section 21 of the terminal 20 displays the referred result, obtained by referring the winning or the losing, and the winnings payment information, selected by the user when the lottery ticket is sold, on the display section 23 (S663). Then, the winnings are paid according to the winnings payment information (S664), and the winnings payment service is completed (S665). Then, the process is ended.

In this case, the control section 21 of the terminal 20 transmits the winnings payment information to the service server 30 when the winnings have been paid, and the control section 31 of the service server 30 stores the winnings payment information in the lottery ticket sale information storage section 34, so as to update the lottery ticket information (S666).

Accordingly, the winnings are paid only when, not only the residence codes inputted by the user respectively when the lottery ticket is sold and when the winnings are paid are the same, but also the secret code inputted by the user is exact.

In this case, the payment of the winnings by the way of the bank payment does not necessarily have to follow the process as described above, but the winnings can be paid, for example, by utilizing a method, in which the service server reports the information in relation to the winning of the lottery ticket directly to a bank designated by the winner.

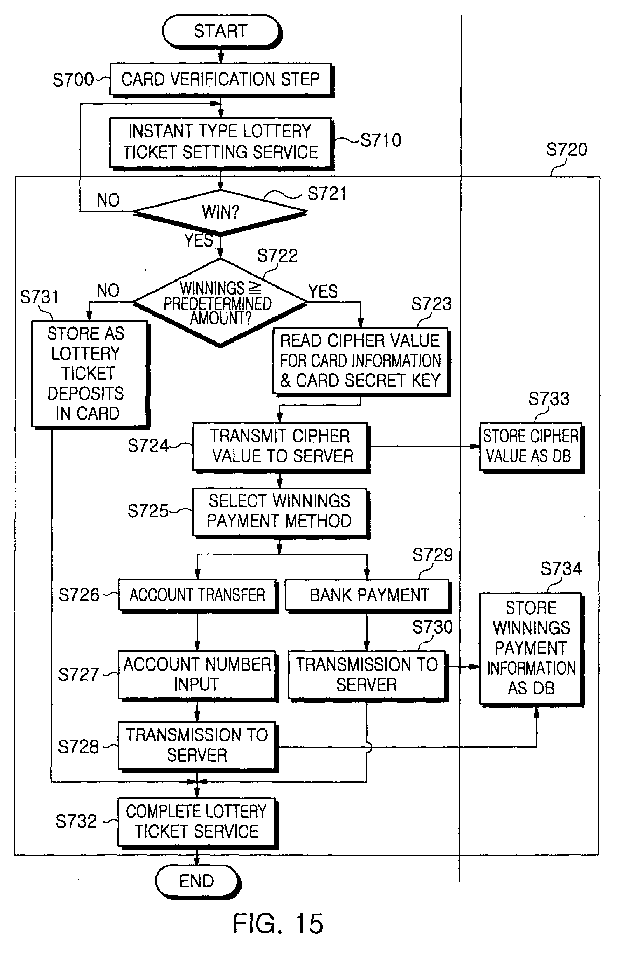

Meanwhile, in a lottery ticket selling service according to a sixth embodiment of the present invention as shown in FIG. 15, the control section 21 of the terminal 20 carries out a card verification step (S700), in which the IC card 10 used in purchasing the lottery ticket is verified, and an instant type lottery ticket selling step (S710), in which an instant type lottery ticket is sold, and then carries out a winnings-payment-requirement-setting step (S720), in which requirements to pay the winnings when the sold instant type lottery ticket is a winning ticket are set. In this case, a detailed description about the card verification step (S700) and the instant type lottery ticket selling step (S710) will be omitted because they are the same as those in the fourth embodiment shown in FIGs. 11A and 11B.

To describe the winnings-payment-requirement-setting step (S720) in detail, at first, the control section 21 of the terminal 20 confirms if the lottery ticket number sold to the user in the instant type lottery ticket selling step (S710) is a winning number (S721). When the lottery ticket is not the winning number, the process returns to the step S710, in which the main menu is displayed again. When the lottery ticket is the winning number, the control section 21 confirms if the winnings for the winning lottery ticket exceed a predetermined amount of money (S722).

As a result of the confirmation, when the winnings exceed the predetermined amount of money, the control section 21 controls the card reader section 24 to transmit an order, which requires a transmission of a cipher value for verifying the IC card 10, to the IC card 10.

The control section 11 of the IC card 10 controls the cipher algorithm section 13 to generate cipher values for the card secret key and the card information stored in the memory section 12, and then transmits the generated cipher values through the communication section 28 to the terminal 20 (S724).

After the cipher values generated in the IC card 10 are transmitted to the service server 30, the control section 21 guides the user to select a method of receiving the winnings by means of the display section 23, and the user selects a method of receiving the winnings by means of the input section 22, according to the guide of the winnings payment methods displayed on the display section 23 (S725).

When the user selects an account transfer as the method of receiving the winnings by means of the input section 22 (S726), and inputs an account number (S727), the control section 21 transmits the inputted account transfer information through the communication section 28 to the service server 30 (S728).

On the other hand, when the user selects a bank payment as the method of receiving the winnings by means of the input section 22 (S729), the control section 21 transmits the inputted bank payment information to the service server 30 (S730).

Further, when the winnings do not exceed the predetermined amount of money in the step S722, the control section 21 controls the card reader section 24 to store the winnings in the user sector of the memory section 12 of the IC card 10 as lottery ticket deposits (S731).

Thereafter, the control section 21 of the terminal 20 completes the lottery ticket selling service (S732), and then the process is ended.

In the meantime, the control section 31 of the service server 30 stores the cipher values, received through the communication section 33 from the terminal 20, in the lottery ticket sale information storage section 34 as databases (S733), and stores the winnings payment information, received from the terminal 20, in the lottery ticket sale information storage section 34 (S734).

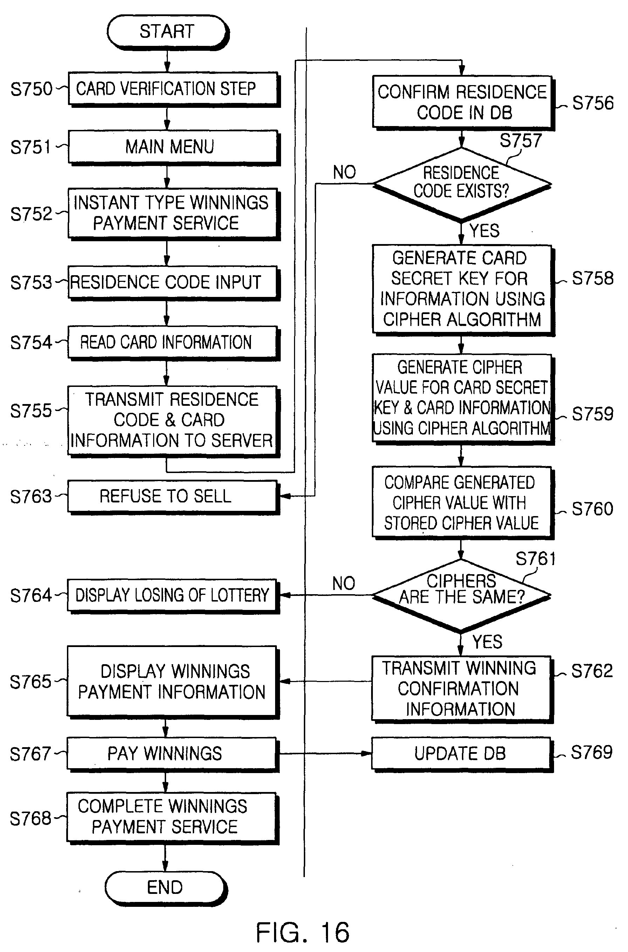

When the lottery ticket purchased by means of the lottery ticket selling service is a winning ticket and the user selects the bank payment from the various winnings payment service, the user can receive the winnings from a designated bank according to a process of the winnings payment service as shown in FIG. 16, which will be described hereinafter.

Referring to FIG. 16, the control section 21 of the terminal 20 carries out a card verification step (S750), in which if the IC card 10 is normal is confirmed, and then displays the main menu on the display section 23 (S751).

The user selects the instant type lottery ticket winnings payment service from the main menu by means of the input section 22 (S752), and the control section 21 displays a message requiring the user to input the user□s residence code on the display section 23 (S753).

When the user has inputted the residence code through the input section 22, the control section 21 controls the card reader section 24 to read the card information stored in the memory section 12 (S754), and transmits the inputted residence code and the read card information to the service server 30 through the communication section 28 (S755).

In the meantime, the control section 31 of the service server 30 searches for the residence code, received through the communication section 33 from the terminal 20, from the lottery ticket information stored in the lottery ticket sale information storage section 34 (S756), so as to confirm if there exists the received residence code (S757).

When the residence code exists as a result of the confirmation, the cipher algorithm section 36 generates a card secret key by means of the card information received from the terminal 20, according to the control of the control section 31 (S758), and generates a cipher value for the generated card secret key and the card information (S759).

Further, the lottery ticket purchaser verification section 37 compares the cipher value generated in the cipher algorithm section 36 with the cipher value already stored in the lottery ticket sale information storage section 34 (S760), so as to judge if they are the same (S761). In this case, the cipher value stored in the lottery ticket sale information storage section 34 is a value generated in the IC card 10 when the lottery ticket selling service is carried out according to the sixth embodiment of the present invention as shown in FIG. 15.

As a result of the comparison, when the cipher value generated in the service server 30 is equal to the cipher value already stored in the lottery ticket sale information storage section 34, the control section 31 confirms the lottery ticket information stored in the lottery ticket sale information storage section 34, so as to refer if the lottery ticket sold to the user is a winning ticket, and then transmits the referred result to the terminal 20 (S762).

The control section 21 of the terminal 20 displays a predetermined message on the display section 23 according to the referred result received from the service server 30.

That is, when the residence code inputted through the input section 22 by the user does not exist in the lottery ticket sale information storage section 34 of the service server 30, the control section 21 displays a message refusing to sell the lottery ticket on the display section 23 (S763).

Further, when the cipher values are not the same as a result of the comparison in the step S761 in which the cipher values are compared by the service server 30 if they are the same, the control section 21 of the terminal 20 displays a message informing a losing of the lottery on the display section 23 (S764).

When the cipher values are the same as a result of the comparison in the step S761 in which the cipher values are compared by the service server 30 if they are the same, the control section 21 displays the referred result, obtained by referring to the display section 23 for the winning or the losing, and the winnings payment information, selected by the user when the user purchases the lottery ticket, on the display section 23 (S765). Then, the winnings are paid according to the winnings payment information (S767), and the winning reference service is completed (S768). Then, the process is ended.

In this case, the control section 21 of the terminal 20 transmits the winnings payment information to the service server 30 when the winnings have been paid, and the control section 31 of the service server 30 stores the winnings payment information in the lottery ticket sale information storage section 34, so as to update the lottery ticket information (S769).

Therefore, the winnings are paid only when, not only the residence codes inputted by the user respectively when the lottery ticket is sold and when the winnings are paid are the same, but also the card information stored in the IC card 10 is equal to the cipher value generated for the card secret key.

In this case, the payment of the winnings by the way of the bank payment does not necessarily have to follow the process as described above, but the winnings can be paid, for example, by utilizing a method, in which the service server reports the information in relation to the winning of the lottery ticket directly to a bank designated by the winner.

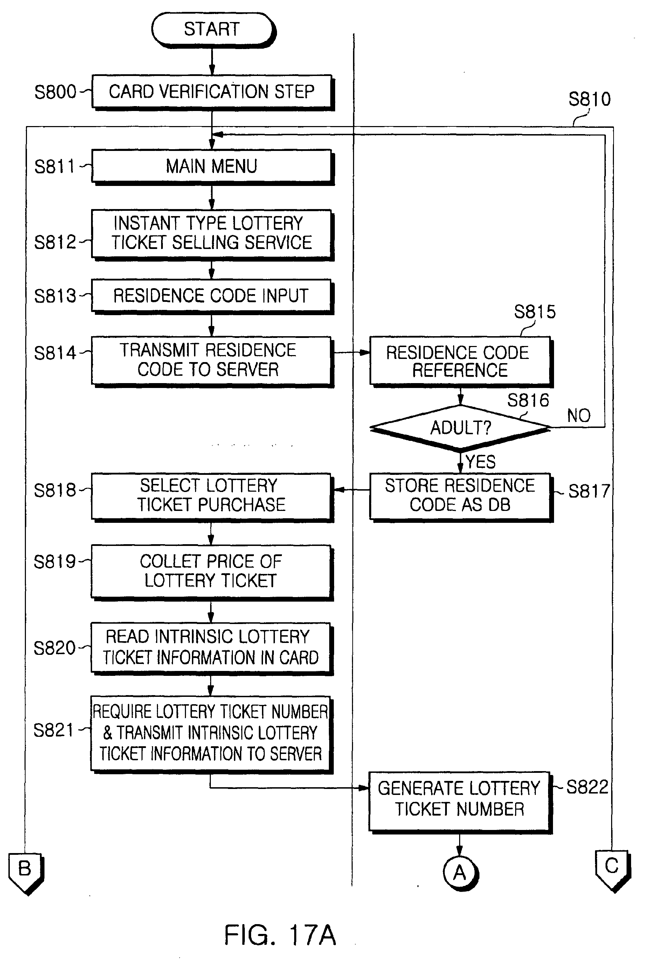

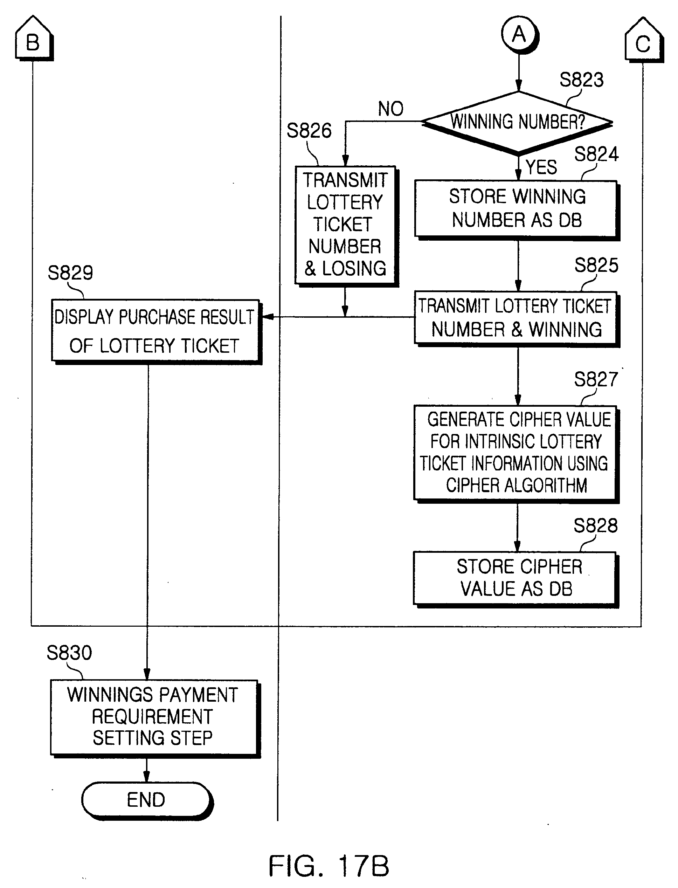

Meanwhile, in a lottery ticket selling service according to a seventh embodiment of the present invention as shown in FIGs. 17A and 17B, the control section 21 of the terminal 20 carries out a card verification step (S800), in which the IC card 10 used in purchasing the lottery ticket is verified if it is normal, and then carries out an instant type lottery ticket selling step (S810), in which an instant type lottery ticket verified to be a normal card is sold.

In the instant type lottery ticket selling step (S810), the control section 21 of the terminal 20 displays a main menu (S811). Then, the user chooses the instant type lottery ticket selling service from the main menu by means of the input section 22 (S812), and inputs the residence code according to the requirement displayed on the display section 23 to input the user□s residence code (S813).

The control section 21 transmits the residence code, inputted through the input section 22 by the user, through the communication section 28 to the service server 30 (S814).

In the meantime, when the residence code has been received through the communication section 33 from the terminal 20, the control section 31 of the service server 30 refers the inputted residence code (S815), so as to verify if the user of the IC card 10, who want to buy the lottery ticket by means of the terminal 20, is an adult (S816).

When the user of the IC card 10 is an adult as a result of the verification, the lottery ticket sale information storage section 34 stores the inputted residence code as a database, according to the control of the control section 31 (S817), and transmits the verified result of the residence code to the terminal 20.

According to the referred result of the residence code received through the communication section 28, the control section 21 returns the process to the step S811, in which the main menu is displayed again, when the user of the IC card 10 is not an adult, while the control section 21 displays a message requiring the user to select the kind of the instant type lottery ticket he or she want to buy, when the user of the IC card 10 is an adult (S818).

When the user selects the instant type lottery ticket purchase displayed on the display section 23 by means of the input section 22, the control section 21 controls the card reader section 24 to collect the price of the sold lottery ticket by balancing the price from the lottery ticket dedicated fund stored in the user sector of the memory section 12 of the IC card 10 (S819), and reads the intrinsic lottery ticket information stored in the memory section 12 of the IC card 10 (S820). In this case, the intrinsic lottery ticket information is information, which is stored in the issuer preparation sector and assigned to each IC card 10 issued for purchasing the lottery ticket.

The control section 21 transmits an order, which requires the read intrinsic lottery ticket information and the lottery ticket number, through the communication section 28 to the service server 30 (S821).

In the meantime, the control section 31 of the service server 30 controls the lottery ticket information generation section 35 to generate the lottery ticket number according to the request for the lottery ticket number received through the communication section 33 from the terminal 20 (S822), and confirms if the generated lottery ticket number is a winning number (S823).

As a result of the confirmation, when the generated lottery ticket number is the winning number, the control section 31 stores the winning number in the lottery ticket sale information storage section 34 as a database (S824), and transmits the generated lottery ticket number together with the winning of the lottery ticket to the terminal 20 (S825). In this case, when the generated lottery ticket number is not the winning number, the control section 31 transmits the fact that the lottery ticket is not a winning ticket, together with the generated lottery ticket number, to the terminal 20 (S826).

Further, when the generated lottery ticket number is the winning number, the control section 31 transmits the fact to the terminal 20, and then controls the cipher algorithm section 36 to generate a cipher value for the intrinsic lottery ticket information received in the terminal 20 (S827) and stores the generated cipher value in the lottery ticket sale information storage section 34 (S828).

The control section 21 of the terminal 20 displays the lottery ticket purchase result, including the lottery ticket number and the winning or the losing of the lottery ticket received through the communication section 28 from the service server 30, on the display section 23 (S829).

When the instant type lottery ticket selling step (S810) has been completed, the control section 21 carries out a winnings-payment-requirement-setting step (S830), in which requirements to pay the winnings when the sold instant type lottery ticket is a winning ticket are set, and a detailed description of which will be omitted since it is the same as the winnings-payment-requirement-setting step (S530) shown in FIG. 11B.

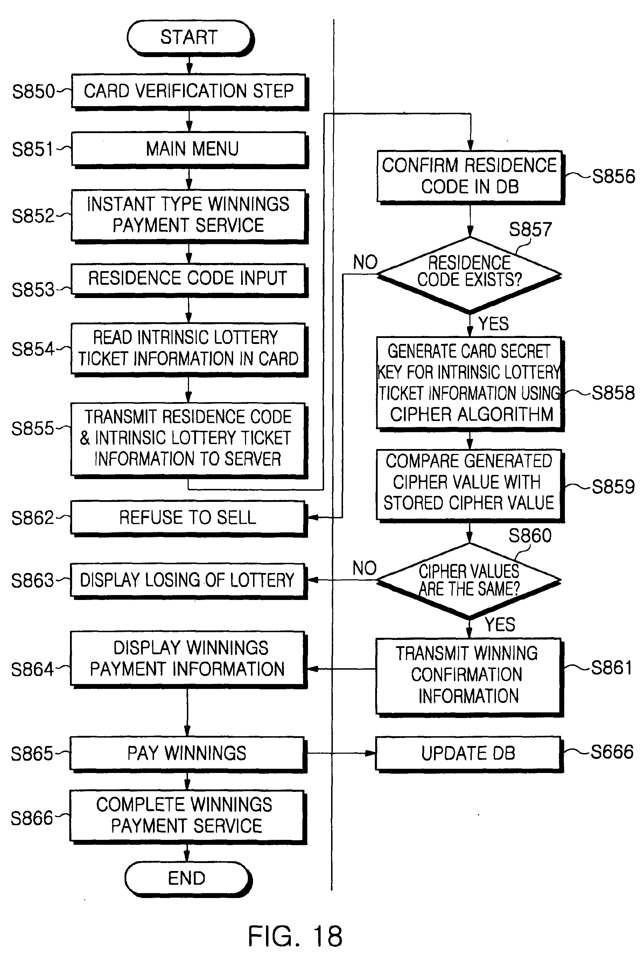

When the lottery ticket purchased by means of the lottery ticket selling service is a winning ticket and the user selects the bank payment from the various winnings payment service, the user can receive the winnings from a designated bank according to a process of the winnings payment service as shown in FIG. 18, which will be described hereinafter.

Referring to FIG. 18, the control section 21 of the terminal 20 carries out a card verification step (S850), in which if the IC card 10 is normal is confirmed, and then displays the main menu on the display section 23 (S851).

The user selects the instant type lottery ticket winnings payment service from the main menu by means of the input section 22 (S852), and the control section 21 displays a message, which requires the user to input the user□s residence code, on the display section 23 (S853).

When the user has inputted the users residence code through the input section 22, the control section 21 controls the card reader section 24 to read the intrinsic card information stored in the memory section 12 of the IC card 10 (S854), and transmits the inputted residence code and the read intrinsic card information to the service server 30 through the communication section 28 (S855).

In the meantime, the control section 31 of the service server 30 searches for the residence code, received through the communication section 33 from the terminal 20, from the lottery ticket information stored in the lottery ticket sale information storage section 34 (S856), so as to confirm if there exists the received residence code (S857).

As a result of the confirmation, when the residence code exists, the cipher algorithm section 36 generates a cipher value for the intrinsic card information received from the terminal 20, according to the control of the control section 31 (S858).

The lottery ticket purchaser verification section 37 compares the cipher value generated by the cipher algorithm section 36 with the cipher value already stored in the lottery ticket sale information storage section 34 (S859), so as to judge if the cipher values are the same (S860). In this case, the cipher value already stored in the lottery ticket sale information storage section 34 is a value generated for the intrinsic lottery ticket information stored in the IC card 10 used to purchase the lottery ticket according to the seventh embodiment of the present invention as shown in FIGs. 17A and 17B.

As a result of the judgment, when the cipher value generated in the service server 30 is equal to the cipher value already stored in the lottery ticket sale information storage section 34, the control section 31 confirms the lottery ticket information stored in the lottery ticket sale information storage section 34, so as to refer if the lottery ticket sold to the user is a winning ticket, and then transmits the referred result to the terminal 20 (S861).

The control section 21 of the terminal 20 displays a predetermined message on the display section 23 according to the referred result received from the service server 30.

That is, when the residence code inputted through the input section 22 by the user does not exist in the lottery ticket sale information storage section 34 of the service server 30, the control section 21 of the terminal 20 displays a message refusing to sell the lottery ticket on the display section 23 (S862).

Further, as a result of the comparison in the step S860 in which the cipher values are compared in the service server 30 if they are the same, when the cipher values are not the same, the control section 21 of the terminal 20 displays a message informing a losing of the lottery on the display section 23 (S863).

When the cipher values are the same as a result of the comparison in the step S860 in which the cipher values are compared in the service server 30 if they are the same, the control section 21 of the terminal 20 displays on the display section 23 the referred result of the winning or the losing of the lottery ticket and the winnings payment information selected by the user when the lottery ticket is sold (S864). Then, the winnings are paid according to the winnings payment information (S865), and the winning reference service is completed (S866). Then, the process is ended.

In this case, the control section 21 of the terminal 20 transmits the winnings payment information to the service server 30 when the winnings have been paid, and the control section 31 of the service server 30 stores the winnings payment information in the lottery ticket sale information storage section 34, so as to update the lottery ticket information (S867).

Accordingly, the winnings are paid only when, not only the residence codes inputted by the user respectively when the lottery ticket is sold and when the winnings are paid are the same, but also the cipher value generated for the intrinsic card information stored in the IC card 10 is equal to the cipher value already stored in the lottery ticket sale information storage section 34.

In this case, the payment of the winnings by the way of the bank payment does not necessarily have to follow the process as described above, but the winnings can be paid, for example, by utilizing a method, in which the service server reports the information in relation to the winning of the lottery ticket directly to a bank designated by the winner.

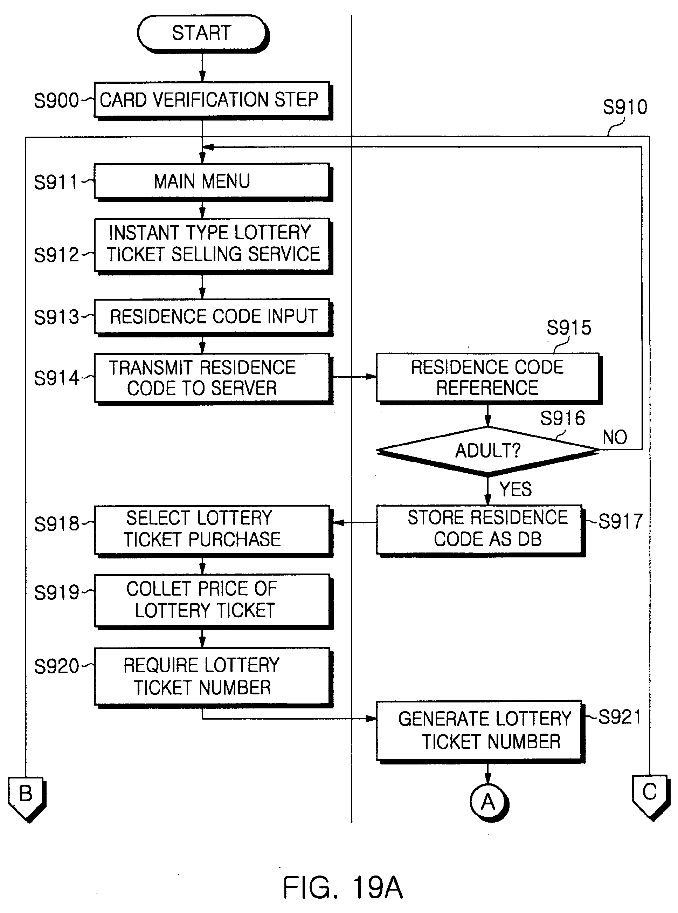

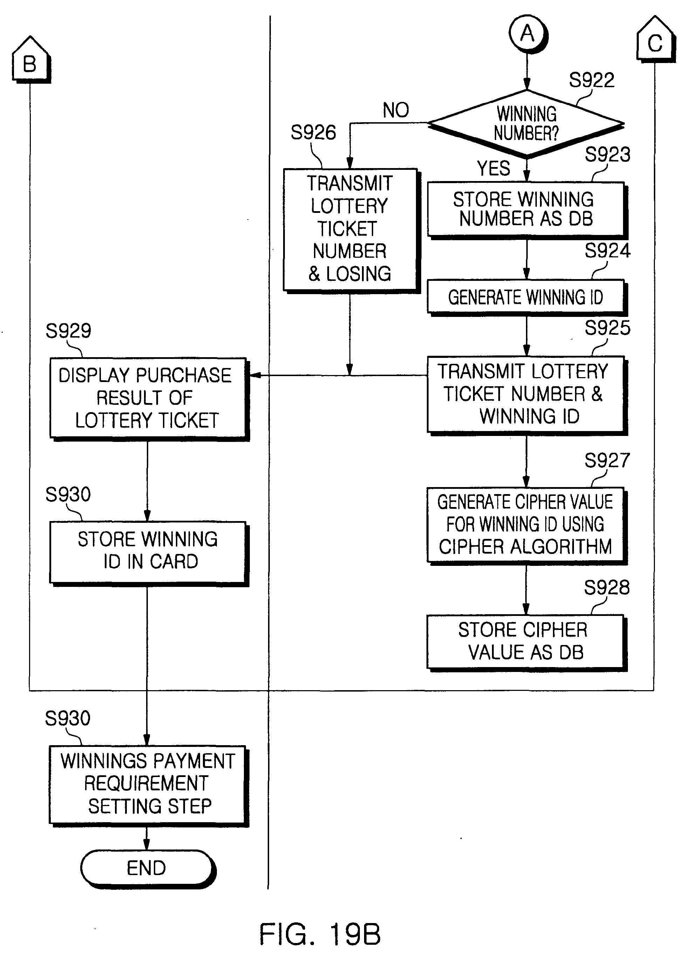

Meanwhile, in a lottery ticket selling service according to an eighth embodiment of the present invention as shown in FIGs. 19A and 19B, the control section 21 of the terminal 20 carries out an instant type lottery ticket selling step (S910), after carrying out a card verification step (S900), in which the IC card 10 to be used in purchasing the lottery ticket is verified if it is normal.

In the instant type lottery ticket selling step, the control section 21 of the terminal 20 displays a main menu (S911).

Then, the user chooses the instant type lottery ticket selling service from the main menu by means of the input section 22 (S912), and inputs the residence code according to the requirement displayed on the display section 23 to input the user□s residence code (S913).

When the user inputs his or her residence code through the input section 22, the control section 21 transmits the inputted residence code through the communication section 28 to the service server 30 (S914).

In the meantime, when the residence code has been received through the communication section 33 from the terminal 20, the control section 31 of the service server 30 refers the inputted residence code (S915), so as to verify if the user of the IC card 10, who want to buy the lottery ticket by means of the terminal 20, is an adult (S916).

When the user of the IC card 10 is an adult as a result of the verification, the lottery ticket sale information storage section 34 stores the inputted residence code as a database, according to the control of the control section 31 (S917), and transmits the verified result of the residence code to the terminal 20.

According to the referred result of the residence code received through the communication section 28, the control section 21 returns the process to the step S911, in which the main menu is displayed again, when the user of the IC card 10 is not an adult, while the control section 21 displays a message requiring the user to select the kind of the instant type lottery ticket he or she want to buy, when the user of the IC card 10 is an adult (S918).

When the user selects the Instant type lottery ticket purchase displayed on the display section 23 by means of the input section 22, the control section 21 controls the card reader section 24 to collect the price of the sold lottery ticket by balancing the price from the lottery ticket dedicated fund stored in the user sector of the memory section 12 of the IC card 10 (S919), and transmits an order, which requires the lottery ticket number, through the communication section 28 to the service server 30 (S920).

In the meantime, the control section 31 of the service server 30 controls the lottery ticket information generation section 35 to generate the lottery ticket number according to the request received through the communication section 33 from the terminal 20 (S921), and confirms if the generated lottery ticket number is a winning number (S922).

As a result of the confirmation, when the generated lottery ticket number is the winning number, the control section 31 stores the winning number in the lottery ticket sale information storage section 34 as a database (S923), and controls the lottery ticket information generation section 35 to generate a winning identification code (S924). Thereafter, the control section 31 transmits the generated lottery ticket number together with the winning of the lottery ticket and the winning identification code to the terminal 20 (S925).

When the generated lottery ticket number is not the winning number, the control section 31 transmits the fact that the lottery ticket is not a winning ticket, together with the generated lottery ticket number, to the terminal 20 (S926).

After transmitting the lottery ticket purchase result to the terminal 20 when the generated lottery ticket number is the winning number, the control section 31 controls the cipher algorithm section 36 to generate a cipher value for the winning identification code generated in the lottery ticket information generation section 35 (S927) and stores the generated cipher value in the lottery ticket sale information storage section 34 (S928).

The control section 21 of the terminal 20 displays the lottery ticket purchase result, including the lottery ticket number and the winning or the losing of the lottery ticket received through the communication section 28 from the service server 30, on the display section 23 (S929). When the winning identification code has been received from the service server 30, the control section 21 controls the card reader section 24 to store the received winning identification code in the user sector of the memory section 12 of the IC card 10 (S930).

When the instant type lottery ticket selling step (S910) has been completed, the control section 21 carries out a winnings-payment-requirement-setting step (S940), in which requirements to pay the winnings when the sold instant type lottery ticket is a winning ticket are set, and a detailed description of which will be omitted since it is the same as the winnings-payment-requirement-setting step (S530) shown in FIG. 11B.

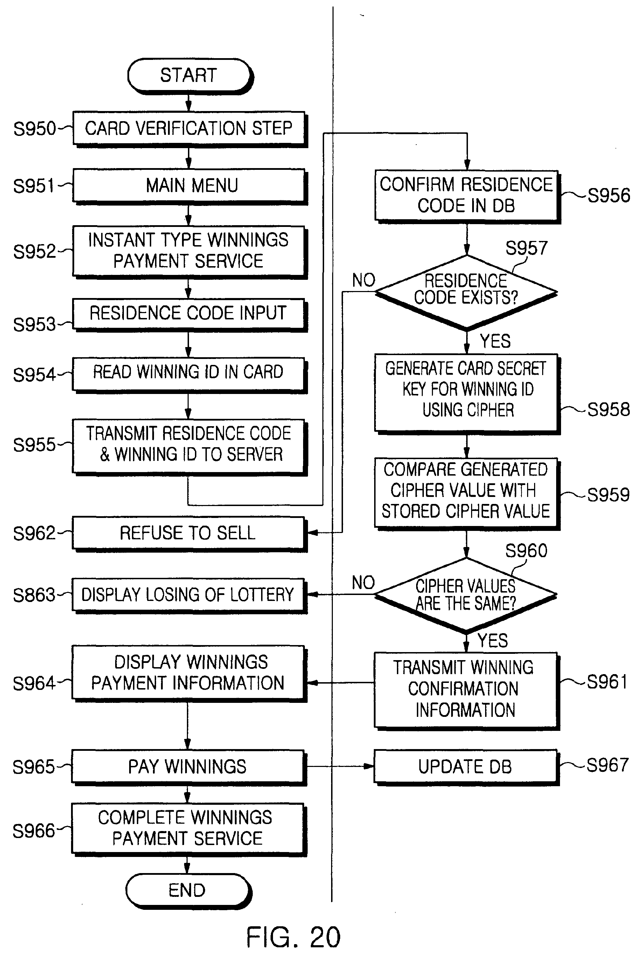

When the lottery ticket purchased by means of the lottery ticket selling service is a winning ticket and the user selects the bank payment from the various winnings payment service, the user can receive the winnings from a designated bank according to a process of the winnings payment service as shown in FIG. 20, which will be described hereinafter.

Referring to FIG. 20, the control section 21 of the terminal 20 carries out a card verification step (S950), in which if the IC card 10 is normal is confirmed, and then displays the main menu on the display section 23 (S951).

The user selects the instant type lottery ticket winnings payment service from the main menu by means of the input section 22 (S952), and the control section 21 displays a message, which requires the user to input the users residence code, on the display section 23 (S953).

When the user has inputted the users residence code through the input section 22, the control section 21 controls the card reader section 24 to read the winning identification code stored in the memory section 12 of the IC card 10 (S954), and transmits the inputted residence code and the read winning identification code to the service server 30 through the communication section 28 (S955).

In the meantime, the control section 31 of the service server 30 searches for the residence code, received through the communication section 33 from the terminal 20, from the lottery ticket information stored in the lottery ticket sale information storage section 34 (S956), so as to confirm if there exists the received residence code (S957).

As a result of the confirmation, when the residence code exists, the cipher algorithm section 36 generates a cipher value for the winning identification code received from the terminal 20, according to the control of the control section 31 (S958).

The lottery ticket purchaser verification section 37 compares the cipher value generated by the cipher algorithm section 36 with the cipher value already stored in the lottery ticket sale information storage section 34 (S959), so as to judge if the cipher values are the same (S960). In this case, the cipher value already stored in the lottery ticket sale information storage section 34 is a value for the winning identification code generated when the lottery ticket selling service is carried out according to the eighth embodiment of the present invention as shown in FIGs. 19A and 19B.

As a result of the judgment, when the cipher value generated in the service server 30 is equal to the cipher value already stored in the lottery ticket sale information storage section 34, the control section 31 confirms the lottery ticket information stored in the lottery ticket sale information storage section 34, so as to refer if the lottery ticket sold to the user is a winning ticket, and then transmits the referred result to the terminal 20 (S961).

The control section 21 of the terminal 20 displays a predetermined message on the display section 23 according to the referred result received from the service server 30.

That is, when the residence code inputted through the input section 22 by the user does not exist in the lottery ticket sale information storage section 34 of the service server 30, the control section 21 of the terminal 20 displays a message refusing to sell the lottery ticket on the display section 23 (S962).

Further, as a result of the comparison in the step S960 in which the cipher values are compared in the service server 30 if they are the same, when the cipher values are not the same, the control section 21 of the terminal 20 displays a message informing a losing of the lottery ticket on the display section 23 (S963).

When the cipher values are the same as a result of the comparison in the step S960 in which the cipher values are compared in the service server 30 if they are the same, the control section 21 displays on the display section 23 the referred result of the winning or the losing of the lottery ticket and the winnings payment information selected by the user when the lottery ticket is sold (S964). Then, the winnings are paid according to the winnings payment information (S965), and the winning reference service is completed (S966). Then, the process is ended.

In this case, the control section 21 of the terminal 20 transmits the winnings payment information to the service server 30 when the winnings have been paid, and the control section 31 of the service server 30 stores the winnings payment information in the lottery ticket sale information storage section 34, so as to update the lottery ticket information (S967).

Accordingly, the winnings are paid only when, not only the residence codes inputted by the user respectively when the lottery ticket is sold and when the winnings are paid are the same, but also the cipher value generated for the winning identification code stored in the IC card 10 is equal to the cipher value already stored in the lottery ticket sale information storage section 34.

As described above, the lottery service system of the present invention includes an integrated circuit card storing fund information for a communication service and a lottery service, lottery ticket information according to the purchase of the lottery ticket, and basic card information, a terminal for receiving the integrated circuit card, reading and writing information in the integrated circuit card, and providing a user interface of a service provided for the user, and a service server communicating with the terminal and providing a communication service and a lottery service for the user. The lottery service system of the present invention sells the lottery ticket to the user of the integrated circuit card, refers if the sold lottery ticket is a winning ticket, and pays the winnings for the winning ticket.

Therefore, the user of the integrated circuit card can utilize not only the communication service, but also the lottery service, in a range of the fund stored in the integrated circuit card.

Further, the user can easily purchase the lottery ticket and can be easily paid the winnings, by means of the integrated circuit card. Moreover, in the lottery service system and the lottery service method of the present invention, the information recorded in the integrated circuit card is encoded and then stored in the service server when the lottery ticket is sold, and the winnings are paid only after the information in the integrated circuit card inserted in the terminal is compared with the information already stored in the service server, so that the security can be firmly maintained.

While there have been illustrated and described what are considered to be preferred specific embodiments of the present invention, it will be understood by those skilled in the art that the present invention is not limited to the specific embodiments thereof, and various changes and modifications and equivalents may be substituted for elements thereof without departing from the true scope of the present invention.

## Claims

1. A lottery service system comprising an integrated circuit card, a server, and a terminal interconnected to the server through a network, wherein the terminal comprises:
a card reader section for reading/writing information in the integrated circuit card, the card reader section recording a subtraction of a service charge for a user of the integrated circuit card from fund information stored in the integrated circuit card;
a card verification section for verifying an availability of the integrated circuit card read by the card reader section;
a display section for displaying a user interface of a lottery service provided for the user of the integrated circuit card;
an input section, through which the user inputs necessary information, according to the user interface displayed on the display section;
a memory section for storing information from the user interface displayed on the display section; and
a first communication section interconnected to the network, so as to transmit the information of the integrated circuit card read by the card reader section and the information inputted through the input section to the server, and to receive the information transmitted from the server, and
the server comprises:
a second communication section interconnected to the network, so as to transmit and receive a kind of the lottery service selected by the user and information about a lottery ticket sold to the user;
a lottery ticket sale information storage section for storing the information about the lottery ticket sold through the terminal as a database;
a lottery ticket information generation section for generating an intrinsic identification code of the lottery ticket sold to the user;
a cipher algorithm section in which a verification cipher algorithm generating a cipher value with respect to the information received by the terminal is stored;
a lottery ticket purchaser verification section for comparing the cipher value generated in the cipher algorithm section when winnings are paid with a cipher value stored in the lottery ticket sale information storage section, so as to confirm the integrated circuit card; and
a control section for controlling sections of the server, so as to provide the service selected by the user.

2. A lottery service system as claimed in claim 1, wherein the integrated circuit card comprises:
a memory section capable of recording and erasing information, the memory section storing card information in relation to the integrated circuit card and fund information for paying the service charge for the lottery service;
a cipher algorithm section in which a verification cipher algorithm generating a cipher value with respect to the information stored in the memory section of the integrated circuit card is stored; and
an input/output section for transmitting information stored in the memory section to external systems and receiving information transmitted from the external systems.

3. A lottery service system as claimed in claim 1, wherein the memory section of the integrated circuit card comprises:
a manufacturer sector in which information in relation to a manufacturer of the integrated circuit card is stored;
an issuer sector, in which information in relation to an issuer of the integrated circuit card is stored;
a fund information sector, in which fund information capable of being expended by the integrated circuit card is stored;
a fund information backup sector, in which the fund information stored in the fund information sector is backed up;
a card verification key sector, in which a card verification key for confirming if the integrated circuit card is available is stored; and
a user sector, in which lottery ticket information of the lottery ticket purchased in the terminal by means of the integrated circuit card is stored, wherein
the lottery ticket information comprises at least one of the type of the lottery ticket, a lottery ticket dedicated fund, lottery ticket deposits, personal information of the purchaser, details of the purchase of the lottery ticket, an intrinsic purchase identification code of the lottery ticket, a secret purchase code of the lottery ticket, and a winning identification code of the lottery ticket.

4. A lottery service system as claimed in one of claims 1 to 3, wherein the intrinsic identification code comprises one of the intrinsic purchase identification code, which is generated when the user purchases the lottery ticket, and the winning identification code, which is generated when the lottery ticket sold to the user is a winning ticket.

5. A lottery service method utilizing a lottery service system comprising an integrated circuit card, a server, and a terminal interconnected to the server through a network the lottery service method comprising:
a card verification step, in which if the integrated circuit card is an available card is determined by confirming a card verification key stored in the integrated circuit card, when the integrated circuit card is inserted into the terminal;
a lottery ticket selling service step, in which, when the integrated circuit card is an available card, if a service selected by a user is a lottery service is confirmed, and the user is required to select a kind of the lottery ticket service in the terminal, and then a lottery ticket selling service is carried out according to the kind of the lottery ticket service selected by the user; and
a winnings payment service step, in which, when the user requires a payment of winnings, if the user□s integrated card is equal to the integrated card used in utilizing the lottery ticket selling service is confirmed in the server, and then a winnings payment service is carried out in the terminal so as to pay the winnings to the user in the terminal.

6. A lottery service method as claimed in claim 5, wherein, when the kind of the lottery ticket service selected by he user is a lotto type lottery service, the lottery ticket selling service step comprises the steps of:
requiring the user, who want to purchase the lottery ticket, to input a residence code of the user, and then transmitting the residence code inputted by the user to the server, by means of the terminal;
referring the residence code, and then, when the user is an adult, transmitting a referred result of the residence code to the terminal, by means of the server;
requiring the user to input personal information of the user and details of a purchase of the lottery ticket, when the user is an adult, by means of the terminal;
collecting a price of the lottery ticket by balancing the price from a fund stored in the integrated card according to the details of the purchase of the lottery ticket, and then transmitting the personal information and the details of the purchase to the server, by means of the terminal;
storing the personal information and the details of the purchase, and generating an intrinsic purchase identification code of the lottery ticket which is sold to the user and transmitting the intrinsic purchase identification code to the terminal, by means of the server; and
storing the personal information, the details of the purchase, and the intrinsic purchase identification code in the integrated circuit card, by means of the terminal.

7. A lottery service method as claimed in claim 5, wherein, when the kind of the lottery ticket service selected by the user is an instant type lottery service, the lottery ticket selling service step comprises the steps of:
requiring the user, who want to purchase the lottery ticket, to input a residence code of the user, and then transmitting the residence code inputted by the user to the server, by means of the terminal;
referring the residence code, and then, when the user is an adult, transmitting a referred result of the residence code to the terminal, by means of the server;
collecting a price of the lottery ticket by balancing the price from a fund stored in the integrated card according to the details of the purchase of the lottery ticket, and requesting the server to transmit a lottery ticket number, when the user is an adult, by means of the terminal;
generating a lottery ticket number and referring if the lottery ticket number is a winning number, and then, when the lottery ticket number is the winning number, storing the winning number and transmitting the lottery ticket number and the winning number to the terminal, by means of the server;
requiring the user to select a winnings payment method, and then transmitting the winnings payment method, selected by winning number, by means of the terminal; and
storing the winnings payment method in the server.

8. A lottery service method as claimed in claim 6 or claim 7, wherein the lottery ticket selling service step further comprises the steps of:
requiring the user to input a secret purchase code, by which the user of the integrated circuit card can be confirmed when the winnings are paid, and transmitting the secret purchase code, inputted by the user, to the server, by means of the terminal; and
generating a cipher value for the secret purchase code by means of a verification cipher algorithm in the server, and storing the cipher value in the server.

9. A lottery service method as claimed in claim 6 or claim 7, wherein the lottery ticket selling service step further comprises the steps of:
reading card information, which is assigned when the integrated circuit card is issued, and transmitting the card information to the server, by means of the terminal; and
generating a cipher value for the card information by means of a verification cipher algorithm in the server, and storing the cipher value in the server.

10. A lottery service method as claimed in claim 6 or claim 7, wherein the lottery ticket selling service step further comprises the steps of:
generating a cipher value for a card secret key and card information of the integrated circuit card, which are assigned when the integrated circuit card is issued, by means of a verification cipher algorithm in the integrated circuit card, and transmitting the cipher value to the terminal from the integrated circuit card;
transmitting the cipher value, received from the terminal, to the server from the terminal; and
storing the cipher value for the card secret key and the card information in the server.

11. A lottery service method as claimed in claim 6 or claim 7, wherein the lottery ticket selling service step further comprises the steps of:
reading intrinsic lottery ticket information, which is assigned when the integrated circuit card is issued, and transmitting the intrinsic lottery ticket information to the server, by means of the terminal; and
generating a cipher value for the intrinsic lottery ticket information by means of a verification cipher algorithm in the server, and storing the cipher value in the server.

12. A lottery service method as claimed in claim 7, wherein the lottery ticket selling service step further comprises the steps of:
generating a winning identification code in the server, and transmitting the winning identification code to the terminal from the server, and then generating and storing a cipher value for the winning identification code by means of a verification cipher algorithm in the server, when the lottery ticket number generated in the server is a winning number; and
storing the winning identification code, received from the server, in the integrated circuit card by means of the terminal.

13. A lottery service method as claimed in claim 5, wherein the winnings payment service step comprises the steps of:
reading information stored in the integrated circuit card, and transmitting the information to the server, by means of the terminal, after carrying out the lottery ticket selling service step;
generating a first cipher value for the information, which is transmitted from the terminal, by means of a verification cipher algorithm in the server, comparing the first cipher value with a second cipher value, which is already stored in the lottery ticket selling service step, so as to refer a result of the lottery in the server, and then transmitting a referred result to the terminal from the server; and
paying winnings to the user in the terminal when the lottery ticket is the winning ticket.
